# EUROPEAN PATENT APPLICATION

(11) **EP 3 200 187 A1**
(43) Date of publication of application: **02.08.2017**
(21) Application number: 17153535.4
(22) Date of filing: 27.01.2017
(51) Int. Cl.: G10L 25/51, G10L 25/63, G10L 15/22, G10L 25/66

(54) **HUMAN VOICE FEEDBACK SYSTEM**

(30) Priority: 28.01.2016 US 201662288301 P
(71) Applicant: Flex Ltd., 486123 Singapore (SG)
(72) Inventor: Ogaz, Ronald S., Los Gatos, CA 95033 (US)
(74) Representative: Witte, Weller & Partner Patentanwälte mbB

(57) **Abstract**

Systems and methods are presented for providing alerts to a user based on rules associated with data received from sensors. The present disclosure relates generally to a device and a method to monitor a user's voice. The device can evaluate sensor data received related to the user to determine if an alert is required based on a profile. When the sensor data corresponds to the profile, an alert associated with the profile can be generated. The alerts can include audible, visual, and haptic elements. In one embodiment, the profiles are associated with a volume of the user's voice, an emotional state of the user, and a health condition of the user. In another embodiment, the profiles define a normal state of the user. The normal state may include a normal volume of the user's voice, a normal emotional state, and a normal medical state.

## Description

### CROSS-REFERENCE TO RELATED APPLICATIONS

The present application claims the benefit of and priority, under 35 U.S.C. § 119(e), to U.S. Provisional Patent Application Serial No. 62/288,301, filed January 28, 2016, entitled "Human Voice Feedback System," the entire disclosure of which is hereby incorporated herein by reference, in its entirety, for all that it teaches and for all purposes.

### BACKGROUND

Many people have some hearing loss. According to one 2013 report, approximately 1.1 billion people have some degree of hearing loss. There are many causes of hearing loss. Hearing loss may occur naturally and may also be due to injury or illness. Exposure to loud noise can also cause temporary or permanent hearing loss. Hearing loss may be classified as mild, moderate, moderate-severe, severe, or profound.

Hearing loss has many negative effects. Diminished hearing can affect the ability of children to learn languages. Hearing loss may also affect the rhythm, resonance, tone, or inflection of their voice. Some people are not aware of the sound of their voice when they speak. Those with diminished hearing may have difficulty controlling the tone or volume of their voice. For example, a person with hearing loss may speak louder or quieter than intended or appropriate for the setting.

Some hearing loss may be treated with hearing aids. Hearing aids work to improve the hearing and speech comprehension of people with hearing loss by magnifying sounds in the user's ears. There are a variety of hearing aids available for both adults and children. Programmable hearing aids are available that can be adapted to amplify specific frequencies by different amounts to compensate for a user's hearing loss.

Other people have difficulty controlling their emotions or the tone or pitch of their voice. For example, some people may become angry without being aware that they are angry. Similarly, other people may sound angry without knowledge of how their voice sounds to others.

Further, some people may have a medical condition that causes unexpected changes in their levels of alertness or which cause loss of consciousness. Some medical conditions that can result in sudden loss of consciousness or unexpected changes in alertness include seizure disorders, fainting, and narcolepsy.

There is a need for a system and a device that can provide feedback to a user based upon the user's speech, an emotional state of the user, or a medical condition of the user.

### SUMMARY

The present disclosure provides novel systems and methods of monitoring a user's voice and providing feedback to the user. One aspect of the present disclosure is a device that monitors the voice of a user. The device includes a sensor. The sensor detects the user's voice and transmits data associated with the user's voice to a processor in communication with the sensor. The data may include intensity, pitch, pace, frequency, loudness (for example, in decibels), speech cadence, spectral content, micro tremors and any other information related to the user's voice. The systems and methods can provide alerts or notifications to a user based on rules saved in memory associated with aspects of the user's voice. One rule may be associated with an emotional state of the user determined from sensor data of the user's voice. Another rule may be associated with the volume of the user's voice determined from the sensor data.

One aspect of the present disclosure is a system and method of providing an alert to a user based upon an emotional state of the user determined from sensor data. The sensor data may include data regarding the user's voice. The data may be received by a processor and analyzed to determine the emotional state of the user. The emotional states may include at least one of calmness, happiness, sadness, anger, and fear. If a rule is associated with the emotional state, the processor may provide the alert associated with the rule.

Another aspect of the present disclosure is a system and method of providing an alert to a user based upon a rule associate with the volume of the user's voice. The volume of the user's voice may be determined from sensor data regarding the user's voice. The data may be received by a processor and analyzed to determine the volume of the user's voice. In one embodiment, the volume is compared to a volume of ambient noise collected by the sensor. The processor then determines whether the volume of the user's voice is associated with a rule. If a rule is associated with the volume, the processor may provide the alert associated with the rule. In one embodiment, a first rule may be associated with the user's voice being too loud. In another embodiment, a second rule may be associated with the user's voice being too quiet. Optionally, the first rule may be defined as a percentage above ambient noise levels and the second rule may be defined as a percentage below ambient noise levels.

One aspect of the present disclosure is a method of providing an alert to a user in response to a deviation from a normal state of the user. The method includes, but is not limited to one or more of: (1) receiving a profile from the user defining the normal state of the user; (2) collecting data related to the user by a sensor of a feedback device; (3) comparing the collected data to the normal state defined by the profile; (4) automatically determining if the collected data indicates a deviation from the normal state; and (5) generating the alert when the collected data indicates a deviation from the normal state. In this manner, the alert provides information on an abnormal state to allow the user to alter the abnormal state.

In one embodiment, the sensor is a microphone and the collected data relates to a voice of the user. In another embodiment, comparing the collected data includes evaluating at least one of a pitch, a pace, a frequency, a volume, a cadence, and micro tremors included in the collected data.

In one embodiment, the feedback device comprises at least one of (a) a first housing with the sensor; (b) a second housing including a processor; and (c) a third housing with a second sensor to collect data associated with the user's voice transmitted through a body of the user, the third housing configured to be positioned proximate to the user's body.

Additionally, or alternatively, automatically determining if the collected data indicates a deviation may further comprise one or more of: (a) collecting data related to the user by a second sensor of a second device in communication with the feedback device; (b) receiving, by the feedback device, the collected data from second sensor; and (c) comparing the collected data from each of the sensor and the second sensor to the normal state defined by the profile.

In one embodiment, the profile defines one or more of: a normal volume of a voice of the user; a normal emotional state of the user; and a normal medical state of the user. In one embodiment, receiving the profile from the user comprises the user: defining a minimum and a maximum volume for the user's voice; defining the normal emotional state for the user; and defining the normal medical state of the user. In one embodiment, the normal emotional state for the user is calm. In another embodiment, the normal medical state of the user is conscious.

In one embodiment, the collected data indicates a deviation from the normal state when at least one of: (a) the user's voice is too loud or too quiet compared to the normal volume; (b) the user's emotional state is one of anger and fear; and (c) the medical state of the user deviates from the normal medical state.

In another embodiment, the minimum and maximum volume of the user's voice are defined in relation to an ambient noise level. Optionally, in another embodiment, the minimum volume for the user's voice is up to about 10 decibels below the ambient noise level collected by the sensor and the maximum volume for the user's voice is up to about 10 decibels above the ambient noise level collected by the sensor.

In one embodiment, the alert includes at least one of a vibration and a sound. Additionally, or alternatively, the alert may further comprise at least one of: (a) a first alert associated with the volume of the user's voice; (b) a second alert associated with an abnormal emotional state of the user; and (c) a third alert associated with an abnormal medical state of the user. In another embodiment, when the user has at least some hearing loss, the first alert comprises: (i) a first vibration when the user's voice is too loud; and (ii) a second vibration when the user's voice is too quiet.

Optionally, the method may further comprise transmitting at least some of the collected data to a second device in communication with the feedback device. Accordingly, the second device may perform at least some of the comparison of the collected data to the normal state defined by the profile. Additionally, or alternatively, the second device may also at least in part determine if the collected data indicates a deviation from the normal state. Similarly, in one optional embodiment, the second device transmits a signal to the feedback device when the collected data indicate a deviation from the normal state. In response to receiving the signal from the second device, the feedback device may generate the alert.

It is another aspect of the present disclosure to provide a feedback device. The feedback device can provide an alert to a user in response to a deviation from a normal state of the user. The feedback device generally includes, but is not limited to, one or more of (1) a first housing with a first sensor; (2) a second housing including a processor; (3) a third housing with a second sensor, the third housing configured to be positioned proximate to a body of the user; and (4) a computer-readable storage medium storing computer-readable instructions. When executed by the processor, the computer-readable instructions cause the processor to perform at least one of: (A) receiving a profile from the user defining the normal state of the user; (B) receiving data related to the user collected by at least one of the first and second sensors; (C) comparing the collected data to the normal state defined by the profile; (D) automatically determining if the collected data indicates a deviation from the normal state; and (E) generating the alert when the collected data indicates a deviation from the normal state. The alert provides information to the user on an abnormal state of the user. In one embodiment, the collected data relates to a voice of the user. In another embodiment, the first sensor is a microphone to collect data associated with the user's voice transmitted through air. In yet another embodiment, the second sensor is operable to collect data associated with the user's voice transmitted through the user's body.

Optionally, in one embodiment, the feedback device further comprises a communications module. In this manner, the feedback device can connect to a second device over a network. Optionally, the feedback device may transmit at least some of the collected data to the second device. The second device can receive the collected data from the feedback device and compare the collected data to the normal state defined by the profile. Additionally, or alternatively, the second device can send a signal to the feedback device that causes the feedback device to generate the alert.

In one embodiment, the profile defines one or more of a normal volume of the user's voice, a normal emotional state of the user, and a normal medical state of the user. In another embodiment, the normal volume of the user's voice is defined as a minimum volume and a maximum volume of the user's voice in relation to an ambient noise level. In yet another embodiment, the normal emotional state of the user is calm. Optionally, in another embodiment, the normal medical state of the user is conscious.

In one embodiment, the collected data indicates a deviation from the normal state when at least one of the user's voice is too loud and too quiet compared to the normal volume. In another embodiment, the collected data indicates a deviation from the normal state when the user's emotional state is anger. In still another embodiment, the collected data indicates a deviation from the normal state when the medical state of the user deviates from the normal medical state. Optionally, the collected data indicates a deviation from the normal state when the user's voice is more than about 10 decibels below the ambient noise level or when the user's voice is more than about 10 decibels above the ambient noise level.

In still another embodiment, the alert further comprises a first alert associated with an abnormal volume of the user's voice, a second alert associated with an abnormal emotional state of the user, and a third alert associated with an abnormal medical state of the user.

It is still another aspect of the present disclosure to provide a non-transitory computer readable medium having stored thereon computer-executable instructions. The computer executable instructions cause a processor to execute a method of providing an alert to a user in response to a deviation from a normal state of the user. The computer-executable instructions comprise one or more of: (1) an instruction to receive a profile from the user defining the normal state; (2) an instruction to collect data related to the user by a sensor of a feedback device; (3) an instruction to compare the collected data to the normal state defined by the profile; (4) an instruction to automatically determine if the collected data indicates a deviation from the normal state; and (5) an instruction to generate the alert when the collected data indicates a deviation from the normal state. Accordingly, the alert provides information on an abnormal state indicated by the collected data to the user.

In one embodiment, the profile defines one or more of a normal volume of a voice of the user, a normal emotional state of the user, and a normal medical state of the user.

Optionally, the instruction to receive the profile from the user may further comprise at least one of: (i) an instruction to receive a minimum volume of the user's voice in relation to an ambient noise level; (ii) an instruction to receive a maximum volume of the user's voice in relation to the ambient noise level; (iii) an instruction to receive the normal emotional state of the user; and (iv) an instruction to receive the normal medical state of the user. In one embodiment, the minimum volume for the user's voice is not more than about 10 decibels below the ambient noise level. In another embodiment, the maximum volume for the user's voice is not more than about 10 decibels above the ambient noise level collected by the sensor. In still another embodiment, the normal emotional state for the user is calm. In yet another embodiment, the normal medical state of the user is conscious.

In one embodiment, the instructions further include some of, but not necessarily all of: (A) an instruction to transmit the collected data to a second device in communication with the feedback device, wherein the second device evaluates at least one of a pitch, a pace, a frequency, a volume, a cadence, and micro tremors included in the collected data; and (B) an instruction to receive processed data from the second device.

Another aspect is a feedback system for a user. The feedback system includes a feedback device. The feedback device includes at least a sensor, a memory, and a processor. The sensor collects data related to the user's voice. In one embodiment, the sensor is a microphone positioned to sense the user's voice transmitted through air. In another embodiment, the sensor is adapted to be positioned against the user's body to collect data related to the user's voice transmitted through the user's body.

The processor receives the data from the sensor. The processor can use the data to identify the user. In one embodiment, the processor can distinguish the user's voice from other people speaking. The processor may measure parameters of the user's voice to determine if the user's voice matches a voice profile. If the processor determines the user's voice matches a voice profile, the processor can provide an alert associated with the voice provide. In one embodiment, if the person is speaking louder or quieter than a predetermined level, the processor of the device may provide and alert or notification to the user. The notification may include, but is not limited to, haptic vibrations, an audible noise (including music or a ring tone), and an audible message.

Additionally, or alternatively, the feedback device may provide the notification when the user's voice substantially conforms to a predetermined voice profile. For example, the user may create a voice profile associated with an emotional state. The feedback device can use the sensor data to determine emotional states including calmness, happiness, sadness, anger, and fear. In this manner, if the processor determines that the user's voice matches the voice profile, the device may provide an alert associated with the profile and its associated emotional state to the user.

In one embodiment, the sensor is integral to the feedback device. Optionally, in another embodiment, the feedback device may receive data from a remote sensor in communication with the feedback device. In another embodiment, the feedback device may receive sensor data from another device of the user, such as, but not limited to, a smart phone, a different wearable device (including a smart watch or a health monitoring device), a hearing aid or blue-tooth ear bud, and a vehicle control system of a vehicle the user is in or proximate to.

In one embodiment, the sensor is a microphone. Additionally, or alternatively, the device may include a sensor that detects vibrations caused by the user's voice that are transmitted through the user's body.

One aspect of the present disclosure is a device for providing an alert to a user. The device generally includes, but is not limited to, at least one of: (1) a body having a housing; (2) a processor; and (3) a computer-readable storage medium storing computer-readable instructions. When executed by the processor, the computer-readable instructions cause the processor to perform one or more of: (A) receiving data from a sensor; (B) determining if the sensor data relates to a profile; and (C) if the sensor data relates to the profile, generating an alert associated with the profile. Optionally, determining if the sensor data relates to the profile comprises evaluating at least one of a pitch, a pace, a frequency, a volume, a cadence, and micro tremors included in the sensor data. In one embodiment, the body is substantially waterproof. Optionally, the body is devoid of external electrical inputs.

In one embodiment, the sensor data relates to the user's voice. In another embodiment, the sensor is a microphone to collect data associated with sounds transmitted through air. Additionally, or alternatively, the device may further comprise a second sensor to collect data associated with sounds transmitted through the user's body. In one embodiment, the device receives at least some of the sensor data from a second device in communication with the device.

In one embodiment, the profile relates to one or more of a volume of the user's voice, an emotional state of the user, and a medical condition of the user. The sensor data may relate to the profile when the user's voice defers from an ambient noise level by a predetermined amount. Optionally, the emotional state of the user comprises one of anger, fear, and sadness.

In one embodiment, the alert is at least one of audible, visible, and haptic. The alert may optionally be generated by a second device in communication with the device.

In another embodiment, the housing comprises one or more of a first housing, a second housing, and a third housing. The first housing includes a sensor to collect data associated with sounds transmitted through air. The second housing includes the processor. The third housing includes a second sensor to collect data associated with sounds transmitted through the user's body. Optionally, the first, second, and third housings may include alignment features to interconnect the housings. In another embodiment, each of the first, second, and third housings include a processor. In one embodiment, the first, second, and third housings communicate by a wireless network. In another embodiment, the first, second, and third housings communicate by a wired connection.

Another aspect of the present disclosure is a method of providing an alert to a user. The method comprises at least one of: (1) receiving, by a feedback device, data from a sensor, the feedback device including a body having a housing and a processor; (2) determining if the sensor data relates to a profile; and (3) generating, when the sensor data relates to the profile, an alert associated with the profile. In one embodiment, the sensor is a microphone and the sensor data relates to the user's voice. In another embodiment, determining if the sensor data relates to the profile include evaluating at least one of a pitch, a pace, a frequency, a volume, a cadence, and micro tremors included in the user's voice. Optionally, the profile relates to one or more of a volume of the user's voice, an emotional state of the user, and a medical condition of the user.

In one embodiment, when the user's voice is too loud or too quiet compared to ambient noise levels recorded by the sensor, the sensor data relates to the profile and the alert is provided to the user. In one embodiment, the feedback device further comprises a second sensor to collect data associated with the user's voice transmitted through the user's body.

In one embodiment, the method further includes one or more of: (A) the feedback device perceiving the presence of a second device (B) the feedback device determining whether the second device has previously paired with the feedback device; (C) exchanging authorization credentials between the feedback device and the second device; and (D) pairing the second device with the feedback device such that sensors and capabilities of the second device may be used by the feedback device.

Yet another aspect of the present disclosure is to provide a non-transitory computer readable medium having stored thereon computer-executable instructions, the computer executable instructions causing a processor of a feedback device to execute a method of providing an alert to a user. The computer-executable instructions comprise at least one of: (1) an instruction to receive, by the feedback device, data from a sensor; (2) an instruction to determine whether the sensor data relates to a profile; and (3) an instruction to generate the alert associated with the profile when the sensor data relates to the profile. The alert optionally is at least one of audible, visible, and haptic.

In one embodiment, the feedback device comprises one or more of: (A) a first housing with a first sensor to collect data associated with sounds transmitted through air; (B) a second housing including the processor; and (C) a third housing with a second sensor to collect data associated with sounds transmitted through the user's body. In another embodiment, the sensor data relates to the user's voice. Optionally, the profile relates to one or more of a volume of the user's voice, an emotional state of the user, and a medical condition of the user.

It is another aspect of the present disclosure to provide a novel noise sensor assembly. The noise sensor assembly generally includes, but is not limited to, a vibration sensor, a noise sensor, and a housing. The housing includes one or more of a processor, memory, and a power supply. The vibration sensor may be any type of sensor that can receive vibrations transmitted through an objection, such as a human body. The noise sensor may comprise a microphone of any type to collect data on voices transmitted through the air. Additionally, or alternatively, the vibration sensor and the noise sensor may be releasably interconnected to the housing.

It is another aspect to provide a feedback device and a method that provide a user with feedback to make the user aware of the level or tone of the user's voice. Additionally, or alternatively, the feedback device and method can monitor the user's voice to compare the user's voice to profiles associated with emergencies (such as a code or duress word associated with an abduction) or anger.

Another aspect includes a system and method to monitor the voice of a user and provide a notification to the user associated with the volume of the user's voice. In one embodiment, the system provides a notification to the user when the user's voice level exceeds a preset value or level. Additionally, or alternatively, the system can provide a different notification to the user when the user's voice level is less than a preset value or level. The voice values may be set according to a situation (public speaking, normal conservation, etc.) or as a percentage of ambient noise. For example, in one embodiment, the user may create a rule such that the system provides an alert when the user's voice is greater than (or less than) 15% louder (or quieter) than an ambient noise level. In one embodiment, the ambient noise level may comprise the volume of the voice of a person in conversation with the user.

Another aspect includes a system and method to monitor the voice of a user and provide a notification to the user when the user's voice matches a pre-set profile. The profile may include parameters of the user's voice associated with an emotional state, such as anger. In another embodiment, the profile may be associated with a speech impairment, such as stuttering or turrets syndrome. In still another embodiment, the profile may be associated with a medical condition, such as a stroke, a seizure, or a loss of consciousness. A notification can also be sent upon system recognition of a custom voice profile (speech cadence, spectral content, micro tremors, etc.). In this manner, the user can create a profile to provide a notification when the user's voice indicates a behavior or speech impediment that the user may not consciously be aware of when speaking.

Still another aspect of the present disclosure is a system and method to monitor user's voice for stress or for a code word. When the stress or the code word are detected, the device may provide a notification to another device. For example, stress in the speaker's voice, or if the speaker says a predetermined code word, may indicate that the speaker has been abducted or is at risk. In one embodiment, if the device detects the stress or code work, the device can send a notification over a communication network to a predetermined person or phone number. Additionally, or alternatively, the device may send a text message or contact an emergency number (such as "911"), turn on a camera or initiate a voice warning or instructions. This system could be used in case of an abduction or other emergency situations.

This system could be operated by users of any age. The system could also be associated with other devices and hardware associated with the user. For example, the system could be associated with a smart device, home security system, or vehicle of the user. When the user is in the vehicle, in an emergency situation (such as an abduction or duress of the user) the system could send a signal to a vehicle control system of the vehicle to activate (or deactivate) a variety of vehicle systems. For example, the system could send a signal which causes the vehicle control system to sound the horn, flash the lights, or activate or deactivate the engine. Continuing this example, when the system detects an emergency, the system could send a signal to a smart device or home security system to call a preset number and, optionally, play a prepared message.

The above-described embodiments, objectives, and configurations are neither complete nor exhaustive. As will be appreciated, other embodiments of the disclosure are possible using, alone or in combination, one or more of the features set forth above or described in detail below.

"The phrases "at least one", "one or more", and "and/or" are open-ended expressions that are both conjunctive and disjunctive in operation. For example, each of the expressions "at least one of A, B and C", "at least one of A, B, or C", "one or more of A, B, and C", "one or more of A, B, or C" and "A, B, and/or C" means A alone, B alone, C alone, A and B together, A and C together, B and C together, or A, B and C together."

The term "a" or "an" entity refers to one or more of that entity. As such, the terms "a" (or "an"), "one or more," and "at least one" can be used interchangeably herein. It is also to be noted that the terms "comprising," "including," and "having" can be used interchangeably.

The term "automatic" and variations thereof, as used herein, refer to any process or operation done without material human input when the process or operation is performed. However, a process or operation can be automatic, even though performance of the process or operation uses material or immaterial human input, if the input is received before the performance of the process or operation. Human input is deemed to be material if such input influences how the process or operation will be performed. Human input that consents to the performance of the process or operation is not deemed to be "material."

The term "bus" and variations thereof, as used herein, can refer to a subsystem that transfers information and/or data between various components. A bus generally refers to the collection communication hardware interface, interconnects, bus architecture, standard, and/or protocol defining the communication scheme for a communication system and/or communication network. A bus may also refer to a part of a communication hardware that interfaces the communication hardware with the interconnects that connect to other components of the corresponding communication network. The bus may be for a wired network, such as a physical bus, or wireless network, such as part of an antenna or hardware that couples the communication hardware with the antenna. A bus architecture supports a defined format in which information and/or data is arranged when sent and received through a communication network. A protocol may define the format and rules of communication of a bus architecture.

The terms "communication device," "smartphone," and "mobile device," and variations thereof, as used herein, can be used interchangeably and may include any type of device capable of communicating with one or more of another device and/or across a communications network, via a communications protocol, and the like. Exemplary communication devices may include but are not limited to smartphones, handheld computers, laptops, netbooks, notebook computers, subnotebooks, tablet computers, scanners, portable gaming devices, phones, pagers, GPS modules, portable music players, and other Internet-enabled and/or network-connected devices.

A "communication modality" can refer to any protocol or standard defined or specific communication session or interaction, such as Voice-Over-Internet-Protocol ("VoIP), cellular communications (e.g., IS-95, 1G, 2G, 3G, 3.5G, 4G, 4G/IMT-Advanced standards, 3GPP, WIMAX™, GSM, CDMA, CDMA2000, EDGE, 1xEVDO, iDEN, GPRS, HSPDA, TDMA, UMA, UMTS, ITU-R, and 5G), Bluetooth™, text or instant messaging (e.g., AIM, Blauk, eBuddy, Gadu-Gadu, IBM Lotus Sametime, ICQ, iMessage, IMVU, Lync, MXit, Paltalk, Skype, Tencent QQ, Windows Live Messenger™ or MSN Messenger™, Wireclub, Xfire, and Yahoo! Messenger™), email, Twitter (e.g., tweeting), Digital Service Protocol (DSP), and the like.

The term "communication system" or "communication network" and variations thereof, as used herein, can refer to a collection of communication components capable of one or more of transmission, relay, interconnect, control, or otherwise manipulate information or data from at least one transmitter to at least one receiver. As such, the communication may include a range of systems supporting point-to-point or broadcasting of the information or data. A communication system may refer to the collection individual communication hardware as well as the interconnects associated with and connecting the individual communication hardware. Communication hardware may refer to dedicated communication hardware or may refer a processor coupled with a communication means (i.e., an antenna) and running software capable of using the communication means to send and/or receive a signal within the communication system. Interconnect refers some type of wired or wireless communication link that connects various components, such as communication hardware, within a communication system. A communication network may refer to a specific setup of a communication system with the collection of individual communication hardware and interconnects having some definable network topography. A communication network may include wired and/or wireless network having a pre-set to an ad hoc network structure.

The term "computer-readable medium," as used herein refers to any tangible storage and/or transmission medium that participates in providing instructions to a processor for execution. Such a medium may take many forms, including but not limited to, non-volatile media, volatile media, and transmission media. Non-volatile media includes, for example, non-volatile random access memory (NVRAM), or magnetic or optical disks. Volatile media includes dynamic memory, such as main memory. Common forms of computer-readable media include, for example, a floppy disk, a flexible disk, hard disk, magnetic tape, or any other magnetic medium, magneto-optical medium, a compact disc read only memory (CD-ROM), any other optical medium, punch cards, paper tape, any other physical medium with patterns of holes, a random access memory (RAM), a programmable read only memory (PROM), and erasable programmable read only memory EPROM, a FLASH-EPROM, a solid state medium like a memory card, any other memory chip or cartridge, a carrier wave as described hereinafter, or any other medium from which a computer can read. A digital file attachment to an e-mail or other self-contained information archive or set of archives is considered a distribution medium equivalent to a tangible storage medium. When the computer-readable media is configured as a database, it is to be understood that the database may be any type of database, such as relational, hierarchical, object-oriented, and/or the like. Accordingly, the disclosure is considered to include a tangible storage medium or distribution medium and prior art-recognized equivalents and successor media, in which the software implementations of the present disclosure are stored. It should be noted that any computer readable medium that is not a signal transmission may be considered non-transitory.

The term "module" as used herein refers to any known or later developed hardware, software, firmware, artificial intelligence, fuzzy logic, or combination of hardware and software that is capable of performing the functionality associated with that element.

The term "desktop" refers to a metaphor used to portray systems. A desktop is generally considered a "surface" that may include pictures, called icons, widgets, folders, etc. that can activate and/or show applications, windows, cabinets, files, folders, documents, and other graphical items. The icons are generally selectable to initiate a task through user interface interaction to allow a user to execute applications and/or conduct other operations.

The term "display" refers to a portion of a physical screen used to display the output of a computer to a user.

The term "displayed image" refers to an image produced on the display. A typical displayed image is a window or desktop. The displayed image may occupy all or a portion of the display.

The term "display orientation" refers to the way in which a rectangular display is oriented for viewing. The two most common types of display orientations are portrait and landscape. In landscape mode, the display is oriented such that the width of the display is greater than the height of the display (such as a 4:3 ratio, which is 4 units wide and 3 units tall, or a 16:9 ratio, which is 16 units wide and 9 units tall). Stated differently, the longer dimension of the display is oriented substantially horizontal in landscape mode while the shorter dimension of the display is oriented substantially vertical. In the portrait mode, by contrast, the display is oriented such that the width of the display is less than the height of the display. Stated differently, the shorter dimension of the display is oriented substantially horizontal in the portrait mode while the longer dimension of the display is oriented substantially vertical. A multi-screen display can have one composite display that encompasses all the screens. The composite display can have different display characteristics based on the various orientations of the device.

The term "electronic address" can refer to any contactable address, including a telephone number, instant message handle, e-mail address, Uniform Resource Locator ("URL"), Global Universal Identifier ("GUID"), Universal Resource Identifier ("URI"), Address of Record ("AOR"), electronic alias in a database, etc., combinations thereof.

The term "gesture" refers to a user action that expresses an intended idea, action, meaning, result, and/or outcome. The user action can include manipulating a device (e.g., opening or closing a device, changing a device orientation, moving a trackball or wheel, etc.), movement of a body part in relation to the device, movement of an implement or tool in relation to the device, audio inputs, etc. A gesture may be made on a device (such as on the screen) or with the device to interact with the device.

The term "gesture capture" refers to a sense or otherwise a detection of an instance and/or type of user gesture. The gesture capture can be received by sensors in three-dimensional space. Further, the gesture capture can occur in one or more areas of a screen, for example, on a touch-sensitive display or a gesture capture region. A gesture region can be on the display, where it may be referred to as a touch sensitive display, or off the display, where it may be referred to as a gesture capture area.

The term "screen," "touch screen," "touchscreen," or "touch-sensitive display" refers to a physical structure that enables the user to interact with the computer by touching areas on the screen and provides information to a user through a display. The touch screen may sense user contact in a number of different ways, such as by a change in an electrical parameter (e.g., resistance or capacitance), acoustic wave variations, infrared radiation proximity detection, light variation detection, and the like. In a resistive touch screen, for example, normally separated conductive and resistive metallic layers in the screen pass an electrical current. When a user touches the screen, the two layers make contact in the contacted location, whereby a change in electrical field is noted and the coordinates of the contacted location calculated. In a capacitive touch screen, a capacitive layer stores electrical charge, which is discharged to the user upon contact with the touch screen, causing a decrease in the charge of the capacitive layer. The decrease is measured, and the contacted location coordinates determined. In a surface acoustic wave touch screen, an acoustic wave is transmitted through the screen, and the acoustic wave is disturbed by user contact. A receiving transducer detects the user contact instance and determines the contacted location coordinates.

The term "window" refers to a, typically rectangular, displayed image on at least part of a display that contains or provides content different from the rest of the screen. The window may obscure the desktop. The dimensions and orientation of the window may be configurable either by another module or by a user. When the window is expanded, the window can occupy substantially all of the display space on a screen or screens.

The terms "determine," "calculate," and "compute," and variations thereof, as used herein, are used interchangeably and include any type of methodology, process, mathematical operation, or technique.

It shall be understood that the term "means," as used herein, shall be given its broadest possible interpretation in accordance with 35 U.S.C., Section 112, Paragraph 6 or other applicable law. Accordingly, a claim incorporating the term "means" shall cover all structures, materials, or acts set forth herein, and all of the equivalents thereof. Further, the structures, materials or acts and the equivalents thereof shall include all those described in the summary, brief description of the drawings, detailed description, abstract, and claims themselves.

The term "profile," as used herein, can refer to any data structure, data store, and/or database that includes one or more items of information associated with a device (e.g., a mobile device, laptop, mobile phone, etc.), or a person.

The term "in communication with," as used herein, refers to any coupling, connection, or interaction using electrical signals to exchange information or data, using any system, hardware, software, protocol, or format, regardless of whether the exchange occurs wirelessly or over a wired connection.

The term "Bluetooth" may refer to wireless technology for exchanging data over short distances (using short-wavelength UHF radio waves in the ISM band) from fixed and mobile devices and building personal area networks (PANs). The technology may connect several devices in order for data synchronization between devices or between devices and a server.

The term "NFC" or "near field communication" may refer to technology wherein radio communication is established between two devices to allow the exchange of data.

The term "peripheral" may refer to one or more auxiliary devices (e.g., input devices, output devices, sensors, accessories, speakers, displays, etc.) that connect to and interact with a computer by either sending or receiving information.

The term "wearable" as used herein includes any wearable electronic devices that are worn by a user under, with, or on top of clothing and/or skin. For example, wearable electronic devices include electronic devices in shoes, socks, belts, wrist devices, glasses, and components of these articles, such as buttons on a shirt. This class of wearable technology has been developed for general or special purpose information technologies and media development. Wearable computers are especially useful for applications that require more complex computational support than just hardware coded logics. The wearable devices include heart rate monitors, blood pressure monitors, glucose monitors, pedometers, movement sensors, wearable computers, and/or the like. Examples of wearable computers may be worn by a user and configured to measure user activity, determine energy spent based on the measured activity, track user sleep habits, determine user oxygen levels, monitor heart rate, provide alarm functions, and more.

The preceding is a simplified summary of the disclosure to provide an understanding of some aspects of the disclosure. This summary is neither an extensive nor exhaustive overview of the disclosure and its various aspects, embodiments, and/or configurations. It is intended neither to identify key or critical elements of the disclosure nor to delineate the scope of the disclosure but to present selected concepts of the disclosure in a simplified form as an introduction to the more detailed description presented below. As will be appreciated, other aspects, embodiments, and/or configurations of the disclosure are possible utilizing, alone or in combination, one or more of the features set forth above or described in detail below.

### BRIEF DESCRIPTION OF THE DRAWINGS

The accompanying drawings, which are incorporated herein and constitute a part of the specification, illustrate embodiments of the disclosure and together with the Summary of the Disclosure given above and the Detailed Description of the drawings given below serve to explain the principles of these embodiments. In certain instances, details that are not necessary for an understanding of the disclosure or that render other details difficult to perceive may have been omitted. It should be understood, of course, that the disclosure is not necessarily limited to the particular embodiments illustrated herein. Additionally, it should be understood that the drawings are not necessarily to scale.
Fig. 1A depicts a feedback system of the present disclosure including a feedback device paired with other devices associated with a user;
Fig. 1B depicts a wireless ear-piece that may interact with the feedback device of Fig. 1A;
Fig. 1C is front elevation view of a feedback device of one embodiment of the present disclosure;
Fig. 1D is an exploded front elevation view of the feedback device of Fig. 1C illustrated with modules of the feedback device separated;
Fig. 1E is a view of the feedback device of Fig. 1C in a position of use proximate to the user's body;
Fig. 2 is a block diagram of an embodiment of a feedback system;
Fig. 3 is a block diagram of an embodiment of a feedback device control system environment;
Figs 4A-4C are block diagrams of components of feedback devices of embodiments of the present disclosure;
Fig. 5 is a block diagram of an embodiment of sensors for a feedback device;
Fig. 6 is a block diagram of an embodiment of a user and device interaction subsystem for a feedback device;
Fig. 7 is a diagram of an embodiment of a data structure for storing information related to users of a feedback device;
Fig. 8 is a flow or process diagram of a method for storing one or more settings and profiles associated with a user;
Fig. 9 is a flow or process diagram of a method for configuring a feedback system with one or more settings and profiles associated with a user;
Fig. 10 is a flow or process diagram of a method for storing one or more settings or profiles associated with a user;
Fig. 11 is a flow or process diagram of a method for storing data associated with a user; and
Fig. 12 is a flow or process diagram of a method providing an alert to a user in response to a deviation from a normal state of the user.

In the appended figures, similar components and/or features may have the same reference label. Further, various components of the same type may be distinguished by following the reference label by a letter that distinguishes among the similar components. If only the first reference label is used in the specification, the description is applicable to any one of the similar components having the same first reference label irrespective of the second reference label.

### DETAILED DESCRIPTION

Presented herein are embodiments of a feedback device, method, and a computer readable medium. The feedback device can be a network-enabled device, such as a portable smart device that receives sensor data, evaluates the sensor data, and provides alerts to a user based on rules saved in memory.

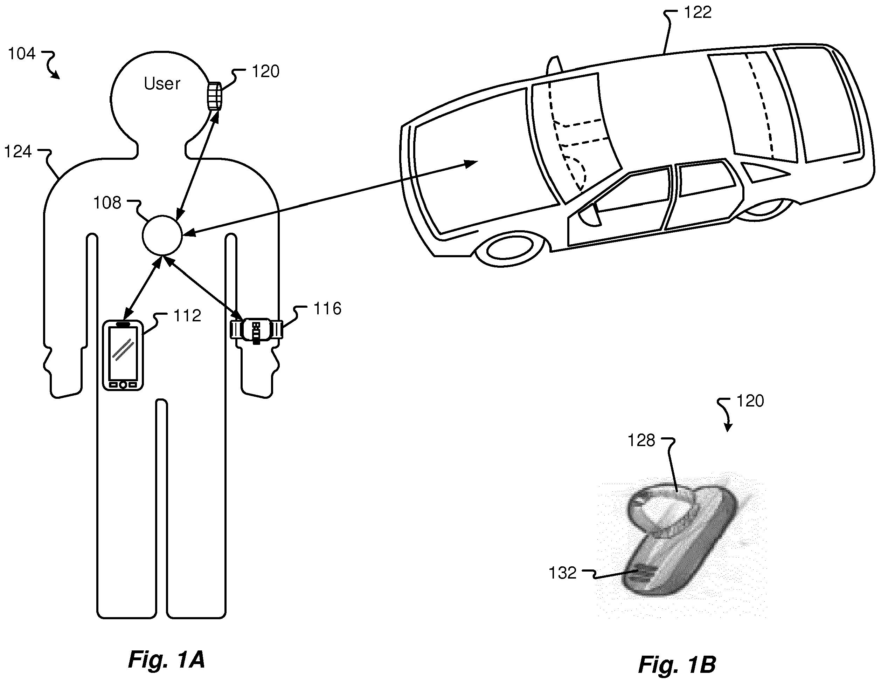

Referring now to Fig. 1A, an embodiment of a voice feedback system 104 of one embodiment of the present disclosure is illustrated. The feedback system 104 generally includes a feedback device 108 that may be paired with one or more other devices 112, 116, 120, 122. The feedback device 108 is operable to receive data from, and send commands to, the devices 112, 116, 120, 122. The other devices may include, but are not limited to, a smart phone 112, a smart watch 116, an earpiece 120 (such as a hearing aid or Bluetooth earbud) and the like, including wearable electronic devices. In one embodiment, when the user 124 is proximate to, or within, a vehicle 122, the feedback device 108 may be paired with an information system or vehicle control system of the vehicle 122. In this manner, the feedback device 108 may send commands to, and receive information from, the vehicle information system.

The components of the feedback system 104 may be worn by a user 124. In one embodiment, the feedback device 108 may be interconnected to a portion of the user's clothing. In another embodiment, the feedback device 108 may include a retention element to secure the feedback device 108 to a portion of the user's body. For example, in embodiment, the feedback device 108 includes a strap or loop. Accordingly, the feedback device 108 may be worn around the user's neck. In one embodiment, the feedback device 108 may be worn on a user's wrist or ankle similar to a watch or bracelet. Additionally, or alternatively, in another embodiment, the feedback device 108 may be positioned within a pocket or similar element of the user's clothing.

As will be described in more detail herein, the feedback device 108 generally includes one or more of a sensor, a memory, a processor, and a power source. The user 124 may create one or more profiles that are stored in the memory of the feedback system 104. The profiles can define ranges and rules associated with a normal state of the user. In one embodiment, the normal state defines one of a minimum/maximum value of the user's voice, an emotional state of the user, and a medical state of the user. Optionally, the profiles may be associated with features of the user's voice. One profile may include a minimum and/or a maximum decibel level for the user's voice for a variety of different environments (such as indoors or outdoors). In one embodiment, the minimum and/or maximum decibel levels of the user's voice are described in the profile as a percentage of background (or ambient) noise levels.

Anther profile may define rules associated with emotional states of the user 124. In one embodiment, the emotional states may be determined by characteristics of the user's voice. More specifically, the user 124 may create profiles and rules associated with emotional states. The emotional states may include calmness, happiness, sadness, anger, fear, and others. The processor can determine the emotional state of the user 124 by analyzing one or more parameters of the user's voice. The voice parameters analyzed may including frequency, loudness, intensity, change in pitch, pace, and the like. The profile may define a normal emotional state. In one embodiment, an abnormal emotional state is any emotional state other than the normal emotional state.

The user 124 may save a rule (or action) associated with each profile. For example, the user 124 may create a profile for anger that includes a rule for the feedback device 108 to provide an alert when the feedback device 108 determines the user 124 is angry. The alert may be a vibration or other haptic feedback generated by the feedback device 108. Alternatively, the alert may be audible. In another embodiment, the alert is visual. Additionally, or alternatively, the alert may be generated by one or more of devices 112, 116, 120, 122 based on a command from the feedback device 108.

Each profile may include an action for the feedback device 108 to perform or initiate when the requirements of the profile are met. The user 124 may also create a profile associated with a voice profile of the user 124. Accordingly, the feedback device 108 can recognize the user's voice and distinguish the user's voice from other voices and noises. Additionally, the feedback device 108 may accept voice commands from the user 124.

The profiles may also include information required to pair the feedback device 108 with one or more of the other devices 112, 116, 120, 122 associated with the user 124. For example, the user may store information required to pair the feedback device 108 with the user's smart phone 112, smart watch 116, earbud 120, and the vehicle control system of the user's vehicle 122. The stored information may also include account information required for the smart phone 112 to access network accounts associated with the user 124.

The sensor of the feedback device 108 collects data associated with the user's voice. The processor of the feedback device 108 receives data from the sensor and analyzes the user's voice. Based on rules stored in the memory, the processor can determine if the data related to the user's voice matches one or more profiles associated with a rule.

For example, the user 124 may be in a quiet public area where the ambient noise is low (such as a movie theater) and speak too loudly. If the user is speaking too loud based on the settings associated with a first profile, the feedback device 108 can perform an action specified by a rule, such as providing a first alert to the user.

In a different example, the user 124 may be in a public area where the ambient noise level is high (such as a restaurant or sporting event) and speak too quietly. Thus, the feedback device 108 may determine the user's voice is too quiet based on a second profile. The feedback device 108 can the provide a second alert based on a rule associated with the second profile.

The processor of the feedback device 108 may also receive data collected by the other devices 112, 116, 120, 122 associated with the user 124. For example, the feedback device 108 may be in communication with (or pared to) other devices 112, 116, 120, 122 that include microphones and other sensors. The other devices 112, 116, 120, 122 may transmit sensor data to the feedback device 108. The feedback device 108 may then analyze the sensor data to determine if the sensor data is associated with a rule stored in memory. In this manner, the feedback device 108 may operate without an integral microphone. Alternatively, integral sensors of the feedback device 108 may be augmented by sensors of the other devices 112, 116, 120, 122.

In one example, microphones of the smart phone 112, the ear piece 120, and the vehicle 122 may also collect data related to the user's voice. When paired with the feedback device 108, the smart phone 112, ear piece 120, and vehicle 122 may transmit data to the processor of the feedback device 108. When the processor of the feedback device 108 receives sensor data related to voices from sensors of devices 112, 120, 122 in different locations, the processor can use information related to when each voice was detected by the different sensors to determine positions of people associated with each voice. In this manner, a first voice may be detected by microphones of each of the feedback device 108, the smart phone 112, the ear piece 120, and the vehicle 122. The processor of the feedback device 108 may then triangulate the source of the first voice based on a variety of different methods such as time difference of arrival (TDOA) and/or frequency difference of arrival (FDOA) techniques. The processor may then determine that the first voice is from a speaker too distant from the feedback device 108 to be associated with the user 124. Accordingly, the processor of the feedback device 108 can ignore the first voice. In contrast, a second voice sensed by the microphones of the feedback device 108, smart phone 112, the ear piece 120, and the vehicle 122 may be determined to be associated with the user 124 by determining the location of the source of the second voice. Accordingly, the processor of the feedback device 108 can monitor sensor data associated with the second voice.

Additionally, the smart watch 116 may include a variety of sensors that can collect data related to the user 124. For example, the smart watch 116 may comprise a fitness device with sensors including at least one of a heartrate monitor, a thermometer, a position sensor, a movement sensor, a respiration sensor, a blood pressure sensor, and the like. The smart watch 116 may provide data collected by these sensors to the feedback device 108.

The alert may be of any type. For example, the feedback device 108 may include a housing worn on the user's body, such as on the user's wrist, or at the user's waist. The housing may provide haptic feedback, an audible signal, or a voice prompt to the user 124. In one embodiment, when the user is speaking too loudly, the alert is a first vibration. In another embodiment, when the user is speaking too quietly, the alert is a second vibration. The first vibration may have a pattern, an intensity, and a duration that is different than a pattern, an intensity, and a duration of the second vibration.

The feedback device 108 may provide the alert. Additionally, or alternatively, when the feedback device 108 is in communication with another device 112, 116, 120, 122 of the user 124, the feedback device 108 may send a signal to the other device 112, 116, 120, 122. The signal may cause the other device 112, 116, 120, 122 to provide the notification or alert to the user 124. Thus, the feedback device 108 may send a voice message or audible signal specified by a rule to the earpiece 120 that is transmitted to the user 124. Continuing this example, the feedback device 108 can send a signal to the smartphone 112 or another device 116 worn or carried by the user 124. The signal can cause the other device 112, 116 to vibrate in a predetermined pattern, play a predetermined sound or message, or display a message on a display of the device 112, 116 to the user to alert the user that the user's voice is associated with a rule. When the rule is associated with the volume of the user's voice, the alert may indicate the user 124 is speaking too loudly or too quietly. When the rule is associated with an emotional state, the alert may indicate the type of emotional state to the user 124.

One embodiment of an ear piece 120 that may be paired with the feedback device 108 is illustrated in Fig. 1B. The ear piece 120 generally includes a speaker 128 and a sensor 132 such as a microphone. As such, the user 124 may receive audio inputs into the earpiece 120 when wearing the earpiece 120 as shown in Fig. 1A. Further, the user 124 may provide speech or vocal commands into the microphone 132, which may be used with speech recognition software of the feedback system 104 to allow the user 124 to provide commands to the devices 108, 112, 116, 120, 122.

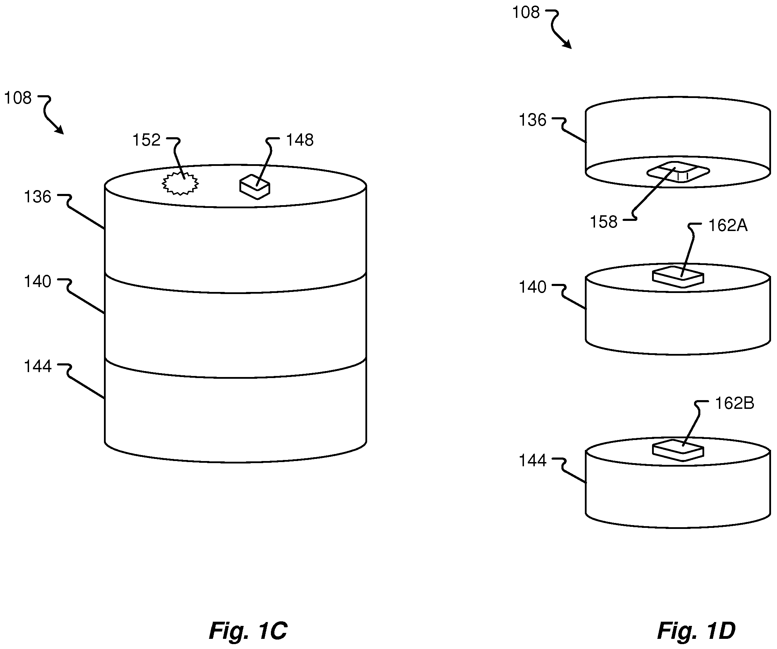

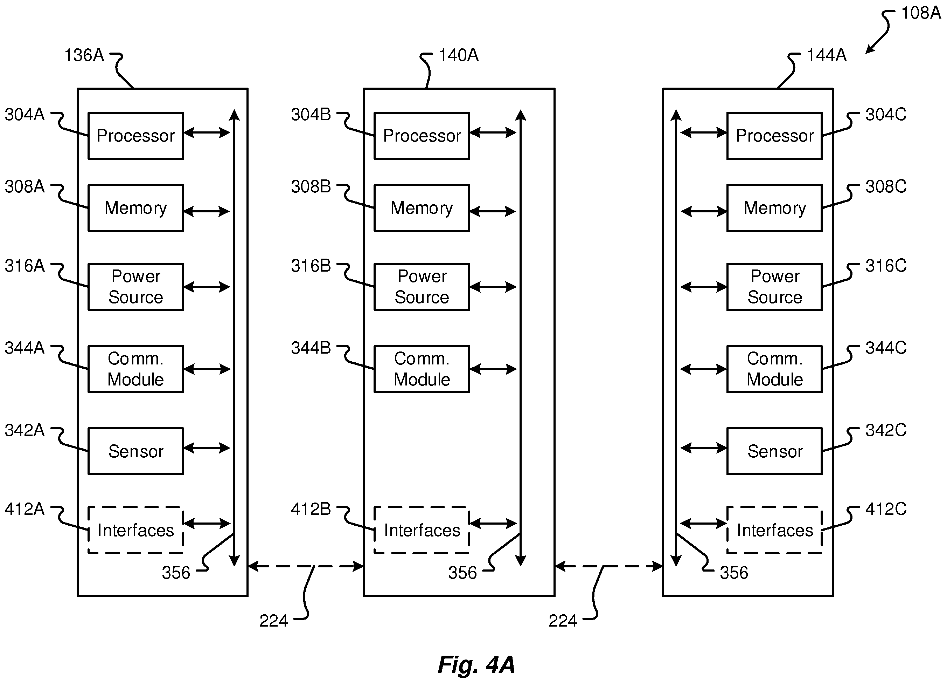

Referring now to Figs. 1C-1D, a feedback device 108 of one embodiment of the present disclosure is illustrated. The feedback device 108 generally includes a first housing 136, a second housing 140, and a third housing 144. In one embodiment, as described in more detail in conjunction with Figs. 4A-4C, at least one housing 136 - 144 includes one or more of a processor, a memory, a power source, a sensor, a communication module, and an interface.

In one embodiment, the first housing 136 includes a sensor to collect data associated with a voice transmitted through the air. The sensor of the first housing 136 may be a microphone selected to collect data in a frequency range produced by human voices. In another embodiment, the third housing 144 includes a sensor to collect data associated with the user's voice transmitted through the user's body. The sensor of the third housing 144 may be selected to collect data associated with frequencies of a human voice transmitted through a human body. Accordingly, the sensor of the third housing 144 may be different than the sensor of the first housing 136.

Optionally, at least one housing 136-144 includes a button 148. The button 148 can receive inputs from the user 124. The inputs received by the button 148 may include inputs to one or more of: (i) change the state of the feedback device 108; (ii) change a setting of the feedback device 108; and (iii) create or alter a profile of the feedback device 108 as described herein. Additionally, or alternatively, one or more of the housings 136 - 144 may include a visual indicator 152. In one embodiment, the visual indicator 152 comprises a light, such as (but not limited to) an LED. In another embodiment, the visual indicator 152 may comprise a display, such as an LCD or other graphical display device. In this manner, the feedback device 108 may provide graphical textual or graphical information to the user 124.

The housings 136 -144 may be releasably interconnected. In one embodiment, the housings 136 - 144 are sealed with no external openings. For example, the housings 136 - 144 may be devoid of electrical and/or data ports or jacks. In this manner, the feedback device 108 may be water resistant or substantially water proof.

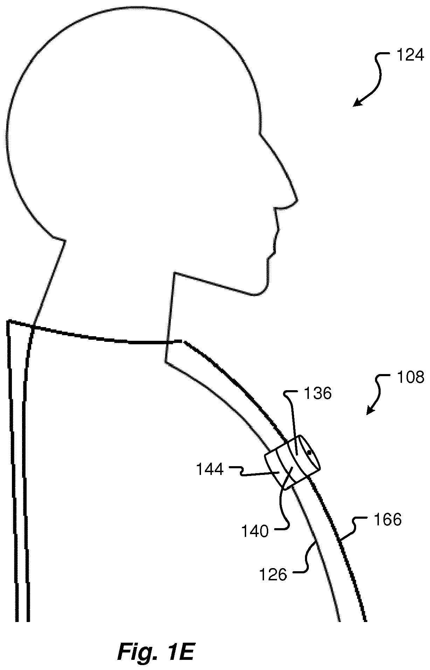

Referring now to Fig. 1D, the feedback device 108 is illustrated with the housings 136 -144 separated. Optionally, the housings 136 - 144 may include corresponding alignment features 158, 162. In one embodiment, the alignment feature 158, 162 provide at least one of alignment, registration, and/or retention. In one embodiment, the second housing 140 includes a protrusion 162A that aligns with a corresponding recess 158 of the first housing 136. Similarly, the second housing 140 may include a recess (not illustrated) that aligns with a protrusion 162B of the third housing 144. As one of skill in the art, the alignment features 158, 162 may be differently shaped to ensure appropriate alignment of the first and second housing 136, 140 as well as alignment between the second and third housing 140, 144. The alignment features 158, 162 may interact to create a predetermined alignment of the housings 136 - 144. These keying and/or receiving features 158, 162 may be configured to interface, couple, and/or interconnect the housings 136 - 144 together, for example as illustrated in Figs. 1C, 1E. The features 158, 162 may include a lock or catch to interconnect the housings 136 - 144 together. In one embodiment, a first pair of features 158, 162 has one or more of a different size, shape, position compared to a second pair of feature 158, 162 to prevent improper assembly of the housings 136, 140, 144.

Referring now to Fig. 1E, in one preferred embodiment, at least a portion of the first housing 136 is configured to be positioned distal to a portion of the body 126 of the user 124. In another embodiment, at least a portion of the third housing 144 is configured to be positioned proximate to a portion of the body 126 of the user 124. In another embodiment, the first housing 136 has a shape and the appearance of a button. In this manner, the user 124 may retain the feedback device 108 in a garment 166, such as a shirt, with the first housing 136 protruding from a button hole. The second and third housings 140, 144 may be positioned within the garment 166 proximate to the body 126 of the user 124 such as generally illustrated in Fig. 1E.

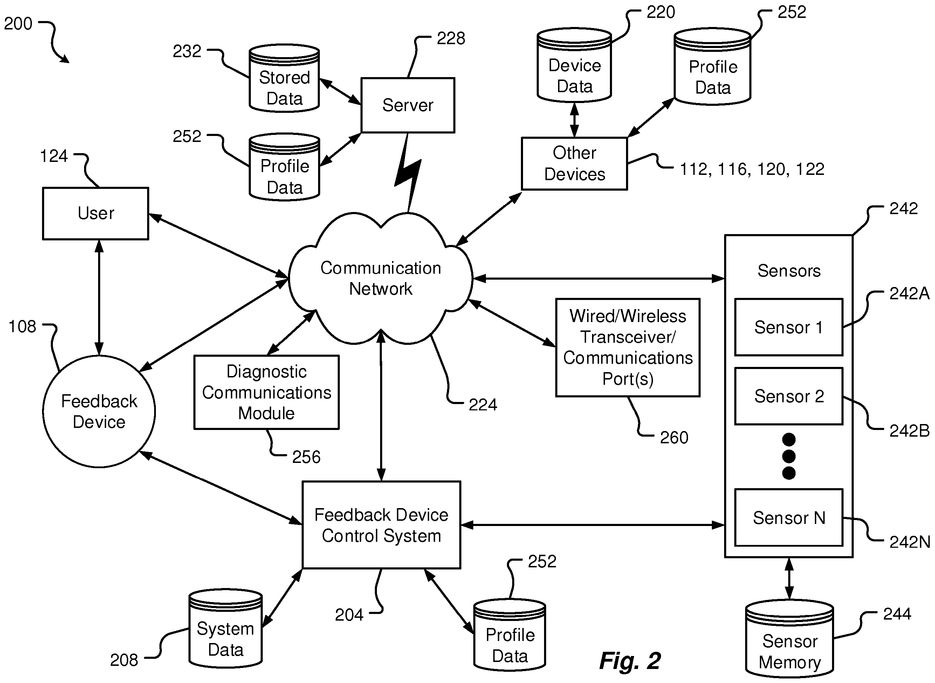

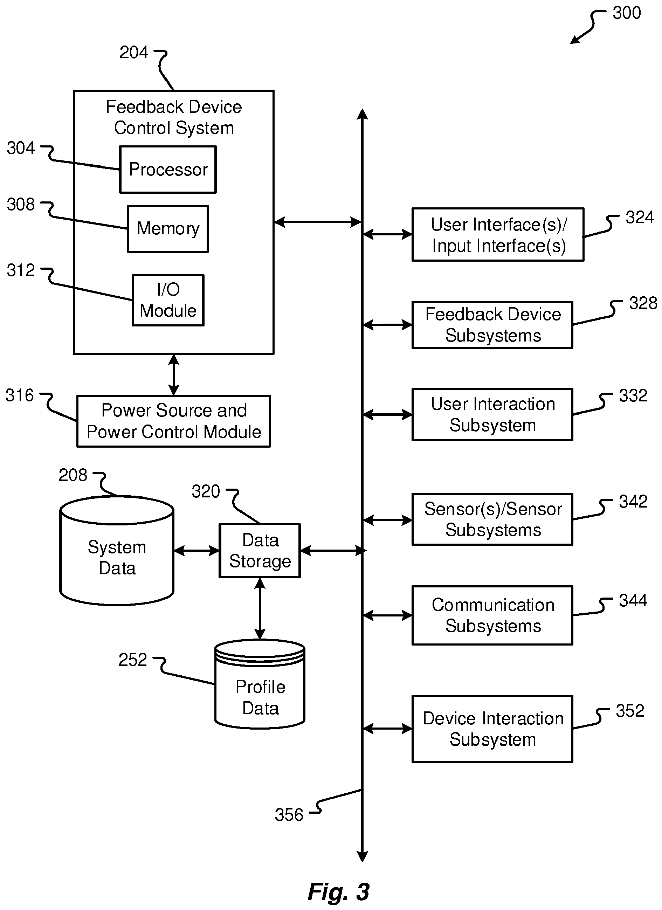

An embodiment of feedback system 200 is shown in Fig. 2. The feedback system 200 may comprise hardware and/or software that conduct various operations for or with the feedback device 108. The operations can include, but are not limited to, providing information to the user 124, receiving input from the user 124, providing alerts to the user 124 based on rules stored in memory 208, 232, 252, and controlling the functions or operation of the feedback device 108, etc. The feedback system 200 can include a feedback device control system 204. The feedback device control system 204 can be any type of computing system operable to conduct the operations as described herein. An example of a feedback device control system 204 may be as described in conjunction with Fig. 3.

The feedback device control system 204 may interact with a memory or storage system 208 that stores system data. System data 208 may be any type of data needed for the feedback device control system 204 to control effectively the feedback device 108. The system data 208 can represent any type of database or other storage system. Thus, the system data 208 can be a flat file data system, an object-oriented data system, or some other data system that may interface with the feedback device control system 204.

The feedback device control system 204 may communicate with a device 112, 116, 120, 122 and/or control the user interfaces of such devices 112, 116, 120, 122. The user interface of devices 112, 116, 120, 122 may be operable to receive user input either through touch input, on one or more user interface buttons, via voice command, via one or more image sensors, or through a graphical user interface that may include a gesture capture region. Further, devices 112, 116, 120, 122 can represent a device that is located or associated with the feedback device 108. The devices 112, 116, 120, 122 can be a mobile device, including, but not limited to, a mobile telephone, a tablet computer, a mobile computer, a fitness monitor, a hearing aid, a vehicle operating or entertainment system, or other type of computing system or device that is associated with, but not necessarily connected to, the feedback device 108. Thus, the feedback device control system 204 can interface with a device 112, 116, 120, 122 and leverage the device's computing capability to provide one or more of the features or functions as described herein.

The device or user interface devices 112, 116, 120, 122 can receive input or provide information to the user 124 and provide data (such as from sensors 242) to the feedback device 108. The user 124 may thus interact with the feedback device control system 204 through the interfaces of any of devices 112, 116, 120, 122. Further, devices 112, 116, 120, 122 may include or have access to device data 220 and/or profile data 252. The device data 220 can be any type of data that is used in conjunction with the devices 112, 116, 120, 122 including, but not limited to, preferences data, device identification information, or other types of data.

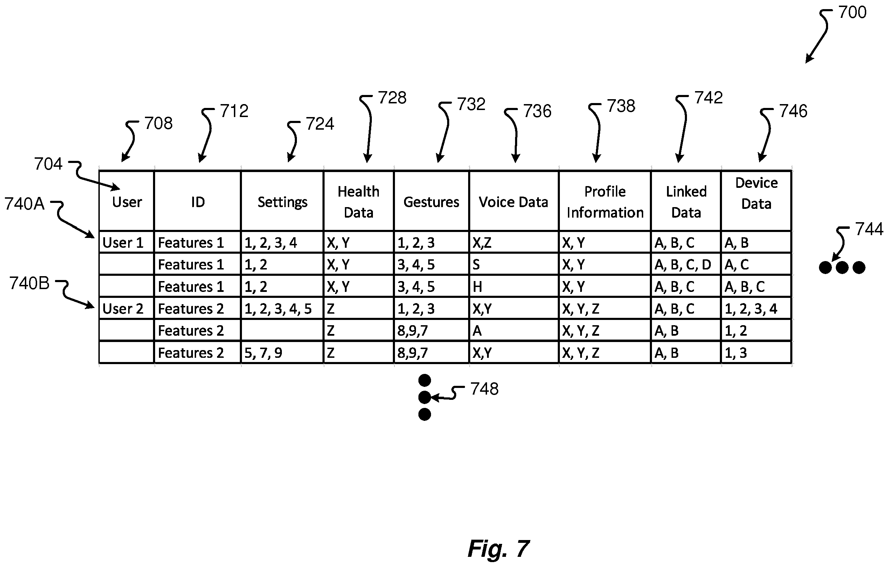

The profile data 252 can be any type of data associated with at least one user 124 including, but in no way limited to, bioinformatics (heart rate, respiration rate, blood pressure, temperature, eye dilation levels, and the like), medical information and history, personal information (e.g., home physical address, business physical address, contact addresses, likes, dislikes, hobbies, size, weight, occupation, business contacts - including physical and/or electronic addresses, personal contacts - including physical and/or electronic addresses, family members, and personal information related thereto, etc.), other user characteristics, user settings and feature preferences, communication preferences, historical information, Internet browsing history, or other types of data. In any event, the data may be stored as device data 220 and/or profile data 252 in a storage system similar to that described in conjunction with Fig. 7. In one embodiment, the profile data defines a normal state of the user. Optionally, the normal state defined by the profile may include one or more of a normal volume of a voice of the user; a normal emotional state of the user; and a normal medical state of the user.

As an example, the profile data 252 may include one or more user profiles. User profiles may be generated based on data gathered from one or more of user inputs (e.g., equipment settings, user interface settings and/or configurations, and the like), recorded settings, geographic location information (e.g., provided by a satellite positioning system (e.g., GPS), Wi-Fi hotspot, etc.), mobile device information (such as mobile device electronic addresses, Internet browsing history and content, application store selections, user settings and enabled and disabled features, and the like), private information (such as user information from a social network, user presence information, user business account, and the like), secure data, biometric information, audio information from on board microphones, video information from on board cameras, Internet browsing history and browsed content using an on-board computer and/or the local area network enabled by the feedback device 108, geographic location information, and the like.

The profile data 252 may include one or more user accounts. User accounts may include access and permissions to one or more settings and/or feature preferences associated with the feedback device 108, communications, device settings, etc. In one example, a user account may allow access to certain settings for a user, while another user account may deny access to the settings for another user, and vice versa. The access controlled by the user account may be based on at least one of a user account priority, role, permission, etc.

For example, a first user 124 may create profiles for various attributes of the user's voice or emotional state that may be monitored by the feedback device 108 in an account associated with the first user. This user account information may include rules and associated actions and alerts to be provided by the feedback system 200. A second user may create different profiles and not have access to the profiles of the first user. As provided herein, the user account information may be part of the user profile and/or other data stored in the profile data 252.

The feedback device control system 204 may also communicate with or through a communication network 224. The communication network 224 can represent any type of wireless and/or wired communication system that may be included within the feedback device 108 or operable to communicate outside the feedback device 108. Thus, the communication network 224 can include a local area communication capability and a wide area communication capability. For example, the communication network 224 can include a Bluetooth® wireless system (including Bluetooth low energy (LE) (or "BLE") and Bluetooth Smart), an 802.7x (e.g., 802.7G/ 802.7N /802.7AC, or the like, wireless system), a bus, an Ethernet network within the feedback device 108, or other types of communication networks that may function with or be associated with the feedback device 108. Further, the communication network 224 can also include wide area communication capabilities, including one or more of, but not limited to, a cellular communication capability, a wireless wide area network communication capability, or other types of communication capabilities that allow for the feedback device control system 204 to communicate outside the feedback device 108.

The feedback device control system 204 may communicate through the communication network 224 to a server 228 that may be located in a facility that is not within physical proximity to the feedback device 108. Thus, the server 228 may represent a cloud computing system or cloud storage that allows the feedback device control system 204 to either gain access to further computing capabilities or to storage at a location distant from the feedback device 108.

The server 228 can include a computer processor and memory and be similar to any computing system as understood to one skilled in the art. Further, the server 228 may be associated with stored data 232. The stored data 232 may be stored in any system or by any method, as described in conjunction with system data 208, device data 220, and/or profile data 252. The stored data 232 can include information that may be associated with one or more users 124 or associated with one or more profiles of a user 124. The stored data 232, being stored in a cloud or in a distant facility, may be exchanged among user devices 108, 112, 116, 120, 122 or may be used by a user 124 in different locations. Additionally, or alternatively, the server 228 may be associated with profile data 252 as provided herein. It is anticipated that the profile data 252 may be accessed across the communication network 224 by one or more components of the system 200. Similar to the stored data 232, the profile data 252, being stored in a cloud or in a distant facility, may be exchanged among devices 112, 116, 120, 122 and feedback device 108 or may be used by a user 124 in different locations or with different devices.

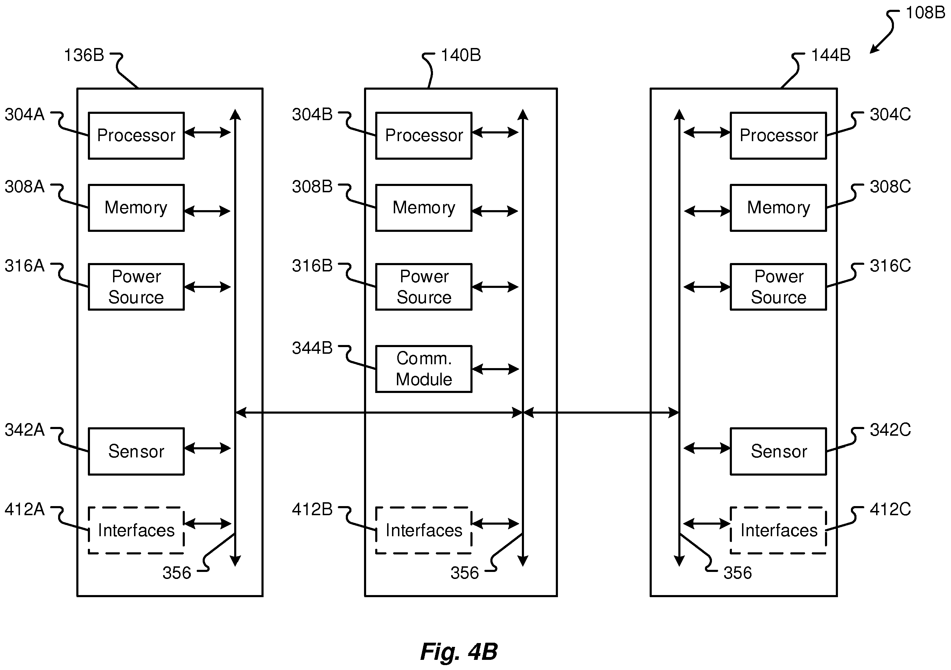

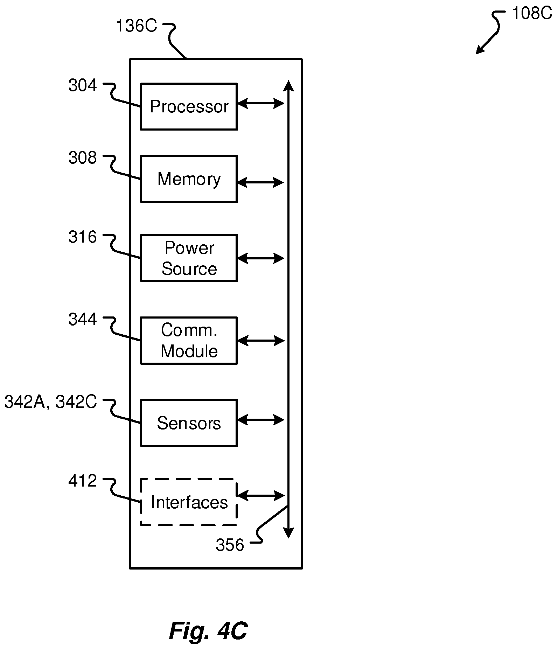

The feedback device control system 204 may also communicate with one or more sensors 242, which are either associated with (or integral to) the feedback device 108 or communicate with the feedback device 108. Sensors 242 may include one or more sensors for providing information to the feedback device control system 204 that determine or provide information about the user 124 of the feedback device 108. In one example, the sensors 242 provide data related to the user's voice and ambient noises around the user 124 to the feedback device control system 204. Embodiments of these sensors 242 may be as described in conjunction with Figs. 4-5.

The feedback device control system 204 may also perform signal processing of signals received from one or more sensors 242. Such signal processing may include estimation of a measured parameter from a single sensor 242 and/or the estimation, blending, location of a sound source, or fusion of a measured state parameter from multiple sensors 242. Signal processing of such sensor signal measurements may comprise stochastic signal processing, adaptive signal processing, and/or other signal processing techniques known to those skilled in the art. In one embodiment, the signal processing includes measurements one or more of intensity, pitch, pace, frequency, loudness (for example, in decibels), speech cadence, spectral content, micro tremors, and other information related to the user's voice.

The various sensors 242 may include one or more sensor memory 244. Embodiments of the sensor memory 244 may be configured to store data collected by the sensors 242. For example, a sound sensor may collect sound data associated with the user 124 of feedback device 108 and/or the environment over time. The sound data may be collected incrementally, in response to a condition, or at specific time periods. In this example, as the sound data is collected, it may be stored in the sensor memory 244. In some cases, the data may be stored along with an identification of the sensor 242 and a collection time associated with the data. Among other things, this stored data may include multiple data points and may be used to track changes in sensor measurements over time and/or to determine a source of a sound as described above. As can be appreciated, the sensor memory 244 can represent any type of database or other storage system.

The diagnostic communications module 256 may be configured to receive and transmit diagnostic signals and information associated with the feedback device 108. Examples of diagnostics signals and information may include, but is in no way limited to, feedback device warnings, sensor status, status of devices 108, 112, 116, 120, 122, service information, user and/or component health, maintenance alerts, recall notifications, predictive analysis, and the like. Embodiments of the diagnostic communications module 256 may handle warning/error signals in a predetermined manner. The signals, for instance, can be presented to one or more of a third party, user 124, feedback device control system 204, and a service provider (e.g., manufacturer, repair facility, etc.).

Optionally, the diagnostic communications module 256 may be utilized by a third party (i.e., a party other than the user 124, etc.) in communicating diagnostic information. For instance, a manufacturer may send a signal to a feedback device 108 to determine a status associated with one or more components associated with the feedback device 108. In response to receiving the signal, the diagnostic communications module 256 may communicate with the feedback device control system 204 to initiate a diagnostic status check. Once the diagnostic status check is performed, the information may be sent via the diagnostic communications module 256 to the manufacturer. This example may be especially useful in determining whether a component recall should be issued based on the status check responses returned from a certain number of feedback devices.

Wired/wireless transceiver/communications ports 260 may be included. The wired/wireless transceiver/communications ports 260 may be included to support communications over wired networks or links, for example with other communication devices, server devices, and/or peripheral devices. In this manner, the feedback device 108 may communication with one or more of devices 112, 116, 120, and 122. Examples of wired/wireless transceiver/communications ports 260 include Ethernet ports, Universal Serial Bus (USB) ports, Institute of Electrical and Electronics Engineers (IEEE) 1594, or other interface ports.

An embodiment of an feedback device control system 300 including a feedback device control system 204 may be as shown in Fig. 3. Beyond the feedback device control system 204, the feedback device control system 300 can include one or more of, but is not limited to, a power source and/or power control module 316, a data storage module 320, user interface(s)/input interface(s) 324, feedback device subsystems 328, user interaction subsystems 332, sensor(s) and/or sensor subsystems 342, communication subsystems 344, and/or device interaction subsystems 352. The subsystems, modules, components, etc. 312-352 may include hardware, software, firmware, computer readable media, displays, input devices, output devices, etc. or combinations thereof. The system, subsystems, modules, components, etc. 204, 312-352 may communicate over a network or bus 356. This communication bus 356 may be bidirectional and perform data communications using any known or future-developed standard or protocol.

The feedback device control system 204 can include a processor 304, memory 308, and/or an input/output (I/O) module 312. Thus, the feedback device control system 204 may be a computer system, which can comprise hardware elements that may be electrically coupled. The hardware elements may include one or more central processing units (CPUs) 304, one or more components of the I/O module 312 including input devices (e.g., a button 148, a mouse, a keyboard, etc.), and/or one or more output devices (e.g., a visual indicator 152 (such as a light or graphic display device), a printer, a vibration device, etc.).

The processor 304 may comprise a general purpose programmable processor or controller for executing application programming or instructions. The processor 304 may, optionally, include multiple processor cores, and/or implement multiple virtual processors. Additionally, or alternatively, the processor 304 may include multiple physical processors. As a particular example, the processor 304 may comprise a specially configured application specific integrated circuit (ASIC) or other integrated circuit, a digital signal processor, a controller, a hardwired electronic or logic circuit, a programmable logic device or gate array, a special purpose computer, or the like. The processor 304 generally functions to run programming code or instructions implementing various functions of the feedback device control system 204.

Examples of the processors as described herein may include, but are not limited to, at least one of Qualcomm® Snapdragon® 800 and 801, Qualcomm® Snapdragon® 810 and 815 with 4G long-term evolution (LTE) Integration and 64-bit computing, Apple® A5 processor with 64-bit architecture, Apple® M5 motion coprocessors, Samsung® Exynos® series, the Intel® Core™ family of processors, the Intel® Xeon® family of processors, the Intel® Atom™ family of processors, the Intel Itanium® family of processors, Intel® Core® i5-4650K and i5-4550K 22nm Haswell, Intel® Core® i5-3550K 22nm Ivy Bridge, the AMD® FX™ family of processors, AMD® FX-4300, FX-6300, and FX-8350 32nm Vishera, AMD® Kaveri processors, Texas Instruments® Jacinto C6000™ automotive infotainment processors, Texas Instruments® OMAP™ automotive-grade mobile processors, ARM® Cortex™-M processors, ARM® Cortex-A and ARM926EJ-S™ processors, other industry-equivalent processors, and may perform computational functions using any known or future-developed standard, instruction set, libraries, and/or architecture.

The input/output module 312 and associated ports may be included to support communications over wired or wireless networks or links, for example with other communication devices, server devices, between housings 136 - 144 of the feedback device 108, and/or with other user devices 112, 116, 120, 122. Examples of an input/output module 312 include an Ethernet port, a Universal Serial Bus (USB) port, Institute of Electrical and Electronics Engineers (IEEE) 1594, or other interface.

In one embodiment, the input/output module 312 may generate an alert associated with a deviation from a normal state of the user. The alert may be one or more of a vibration and a sound. The input/output module 312 may generate different alerts associate with different abnormal states of the user. In one embodiment, the input/output module 312 can generate a first alert associated with an abnormal volume of the user's voice. In another embodiment, the input/output module 312 can generate a second alert associated with an abnormal emotional state of the user. In another embodiment, the input/output module 312 can generate a third alert associated with an abnormal medical state of the user. The alerts may provide information about a deviation from the normal state of the user. Thus, the alert may include an oral message played by a speaker or a visual message on a display, such as display 152 or a display of one of devices 112, 116, 120, 122. In one embodiment, the alert can describe an action for the user to take in response to the deviation from the normal state. Examples of the alerts include, but are not limited to, an audible or textual message such as "speak quieter" or "speak louder" when the user is speaking abnormally. When the user's emotional state is abnormal (such as one of anger or fear), the alert may include a message such as "calm down," "remain calm," "you are becoming angry," or "you are angry." When the user's medical state indicates the user is losing (or has lost) consciousness, the alert may include a message such as "wake up," "you are falling asleep," "pay attention," "call help."

The feedback device control system 204 may also include, or have access to, one or more storage devices 308. By way of example, storage devices 308 may be disk drives, optical storage devices, solid-state storage devices such as a random access memory ("RAM") and/or a read-only memory ("ROM"), which can be programmable, flash-updateable and/or the like. The feedback device control system 204 may additionally include a computer-readable storage media reader; a communications system (e.g., a modem, a network card (wireless or wired), an infra-red communication device, etc.); and working memory 308, which may include RAM and ROM devices as described above. The feedback device control system 204 may also include a processing acceleration unit, which can include a digital signal processor, a special-purpose processor, and/or the like.

The computer-readable storage media reader can further be connected to a computer-readable storage medium, together (and, optionally, in combination with storage device(s)) comprehensively representing remote, local, fixed, and/or removable storage devices plus storage media for temporarily and/or more permanently containing computer-readable information.

The communications system 344 and/or the bus 356 may permit data to be exchanged with an external or internal network and/or any other computer or device described herein. Moreover, as disclosed herein, the term "storage medium" may represent one or more devices for storing data, including read only memory (ROM), random access memory (RAM), magnetic RAM, core memory, magnetic disk storage mediums, optical storage mediums, flash memory devices, and/or other machine readable mediums for storing information.

The feedback device control system 204 may also comprise software elements including an operating system and/or other code. It should be appreciated that alternates to the feedback device control system 204 may have numerous variations from that described herein. For example, customized hardware might also be used and/or particular elements might be implemented in hardware, software (including portable software, such as applets), or both. Further, connection to other computing devices such as network input/output devices may be employed.

The power source and/or power control module 316 can include any type of power source, including, but not limited to, batteries, alternating current sources (from connections to a building power system or power line), solar cell arrays, coils for transferring power and/or data inductively, etc. One or more components or modules may also be included to control the power source or change the characteristics of the provided power signal. Such modules can include one or more of, but are not limited to, power regulators, power filters, alternating current (AC) to direct current (DC) converters, DC to AC converters, receptacles, wiring, other converters, etc. The power source and/or power control module 316 functions to provide the feedback device control system 204 and any other system with power. The power source and/or power control module 316 may also include ports or contacts for interconnecting the feedback device 108 and/or one or more of the housings 136 - 144 to an external source of power. Additionally, or alternatively, the power source and/or power control module 316 may include a capacitive power source, such as a capacitive battery. Capacitive batteries can allow for quick charging and a low profile design. Additionally, or alternatively, the power source and/or power control module 316 may interface with a dock. For example, in one embodiment, the feedback device may be associated with a dock that supplies power to the feedback device and/or the housings 136 -144 through the power source and/or power control module 316. In one embodiment, the dock includes inductive coils to wirelessly supply the power to at least one of the housings 136 - 144.

The data storage 320 can include any module for storing, retrieving, and/or managing data in one or more data stores and/or databases. The database or data stores may reside on a storage medium local to (and/or resident in) the feedback device control system 204 or in the feedback device 108. Alternatively, some of the data storage capability may be remote from the feedback device control system 204 or feedback device 108, and in communication (e.g., via a network) to the feedback device control system 204. The database or data stores may reside in a storage-area network ("SAN") familiar to those skilled in the art. Similarly, any necessary files for performing the functions attributed to the feedback device control system 204 may be stored locally on the respective feedback device control system 204 and/or remotely, as appropriate. The databases or data stores may be a relational database, and the data storage module 320 may be adapted to store, update, and retrieve data in response to specifically-formatted commands. The data storage module 320 may also perform data management functions for any flat file, object oriented, or other type of database or data store.

A first data store that may be part of the feedback device control system 300 is a profile data store 252 for storing data about user profiles and data associated with the users 124. A system data store 208 can include data used by the feedback device control system 204 and/or one or more of the components 324-352 to facilitate the functionality described herein. The data stores 208 and/or 252 may be as described in conjunction with Figs. 2 and/or 7.

The user interface/input interfaces 324 may be as described herein for providing information or data and/or for receiving input or data from a user 124. The user interface/input interfaces 324 may also function with paired devices 112, 116, 120, 122. In this manner, displays and input components (such as keyboards, touch screen displays, etc.) of the devices 112, 116, 120, 122 may be used to send information to, and receive information from, the user 124. In one embodiment, the user 124 may create profiles related to aspects of the user's speech using an interface or display of one of devices 112, 116, 120, 122. Additionally, or alternatively, one or more of the devices 112, 116, 120, 122 may receive signals from the feedback device control system 204 to produce an alert one displays, speakers, and vibration generators of the devices 112, 116, 120, 122.

Feedback device subsystems 328 can include any of the mechanical, electrical, electromechanical, computer, or other systems associated with the function of the feedback device 108. For example, feedback device subsystems 328 can include one or more of, but is not limited to, the electrical system, sensors, power supplies, etc. of the feedback device 108. In one embodiment, the feedback device subsystem 328 generates signals that cause devices 112, 116, 120, 122 to generate an alert associated with a profile. For example, if the user 124 has created a profile associated with an emotional state, the feedback device subsystem 328 may generate a signal that causes one or more of devices 112, 116, 120, 122 to create the alert associated with the emotional state w

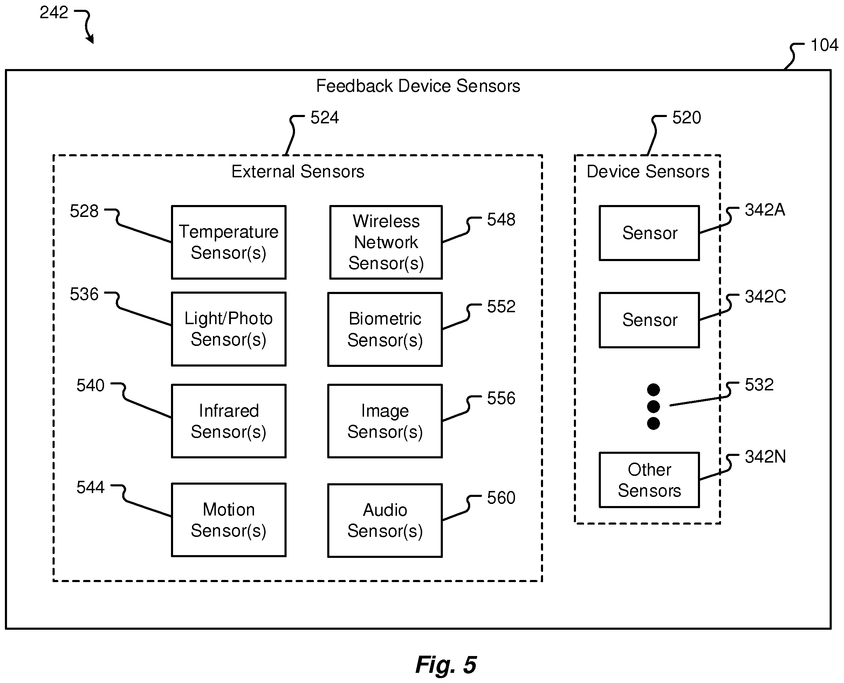

Examples of the other systems and subsystems 332-352 may be as described further herein. For example, the sensor(s)/sensor subsystem 342 may be as described in Fig. 5.

Referring now to Figs. 4A-4C, schematic diagrams of hardware configurations of embodiments of the feedback device 108 of the present disclosure are generally illustrated. It will be appreciated that the device may have different configurations, and may arrange the components differently.

An embodiment of a feedback device 108A which includes three housing 136A, 140A, 144A in wireless communication is illustrated in Fig. 4A. Each of the housings 136A - 144A may generally include one or more of a processor 304, memory 308, a power source 316, a communication module 344, and, optionally, an interface 412. In one embodiment, the interface 412 may be one or more of a button 148, an indicator 152 (such as a light or a display screen), a speaker, and a motion (or vibration) generator. Accordingly, the interface 412 may produce an alert comprising one or more of a visual alert using the indicator 152, an audible signal using the speaker, and a haptic alert such as a vibration to notify the user 124 according to a rule.

In one embodiment, the first housing 136A includes a first sensor 342A and the third housing 144A includes a second sensor 342C. The first sensor 342A may comprise a sensor to collect data associated with sounds transmitted through the air. In one embodiment, the first sensor 342A is a traditional air microphone. In another embodiment, the second sensor 342C is a sensor that can collect data associated with sounds transmitted through the body of the user 124. In one embodiment, the third housing 144A is configured to rest against the user's body 126 allowing body vibrations associated with the user's voice to be collected by the second sensor 342C. The second sensor 342C would enable the feedback device 108 (or improve the capability of the feedback device 108) to differentiate between the user's voice and any nearby voices. For example, in one embodiment, the feedback device 108A may compare characteristics of the user's voice receive by each of sensors 342A, 342C to eliminate sounds produced by other people's voices.

In one embodiment, one or more of the first and second sensors 342A, 342C include a dual analog to digital converter (ADC). Optionally, the ADCs operate at a sampling rate of at least about 50 kilo samples per second (KSPS). In one embodiment, the ADCs produce 24 bit audio files. The feedback device 108 may also include other sensors of any type.

In one embodiment, signal processing of data collected by sensors 342A, 342C may be performed by one or more of the processors 304A - 304C. In one embodiment, the processors 304A, 304C comprise microcontrollers or field-programmable gate arrays (FPGAs). Optionally, processor 304B may comprise a microcontroller that includes a floating point digital speech processing capability. Additionally, or alternatively, the signal process of the sensor data may be performed at least partially by an application running on one of devices 112, 116, 120, 122 or by a server 228 in communication with the feedback device 108.

The communications modules 344 may be of any type that enable the housings 136 - 144 to communicate by network 224. In one embodiment, communications modules 344 enable at least one of a wired and wireless access to communication network 224. As examples, the communications modules 234 can comprise a Wi-Fi, Bluetooth™, WiMax, infrared, NFC, RFID, or other wireless communications link that can access network 224. The communications modules 344 may be configured to send and/or receive data between the feedback device 108, each housing 136 - 144, paired devices 112, 116, 120, 122, and other components of the feedback system 200 as described in Fig. 2. In one embodiment, the communications modules 344 are configured to transmit and receive signals using BlueTooth low energy and/or Bluetooth Smart. In another embodiment, the communications modules 234 of housing 136A - 144A use induction coils to exchange information wirelessly.

Another embodiment of a feedback device 108B is illustrated in Fig. 4B. Feedback device 108B is similar to feedback device 108A, and includes the same (or similar) components 304, 308, 316, 342A, 342C, 344B, and 412. However, one one of the housings 136B, 140B, 144B includes a communications module 344B. In one embodiment, the first and third housings 136B, 144B do not include communications modules. Accordingly, the first and third housings 136B, 144B are interconnected to the second housing 140B by a physical pin or port. In one embodiment, each of the housings 136B - 144B include corresponding leads that transmit signals when the housings are interconnected. Optionally, the leads may be partially, or completely, sealed within the housings 136B - 144B such that the housings are substantially devoid of openings or apertures. In one embodiment, the first and third housings 136B, 144B communicate with the second housing 140B over the bus 356. Alternatively, the housings 136B - 144B may communicate inductively using data coils of the power source 316. In this manner, the second housing 140B and housings 136B, 144B may exchange power and data inductively.

Referring now to Fig. 4C, still another embodiment of a feedback device 108C is illustrated. Feedback device 108C generally includes one housing 136C and at least one sensor 342A, 342C. The feedback device 108C may be carried by the user 124 in a variety of positions. For example, the feedback device 108C may be positioned in a pocket of the user's clothing 166. Alternatively, the feedback device 108C may be interconnected to a piece of jewelry worn by the user, such as a necklace. In one preferred embodiment, the feedback device 108C is carried in a position proximate to the user's mouth. In another embodiment, at least a portion of the housing 136C is configured to be placed in contact with the user's body 126 such that sensor 342C can collect data associated with the user's voice transmitted through the user's body.

Referring now to Fig. 5, a block diagram of an embodiment of sensors 242 for a feedback system 104 of one embodiment are generally illustrated. The sensors 242 may be arranged into one or more groups, such as sensors 520 integral to the feedback device 108 and external sensors 524, such as sensors 528 ... 560 associated with various devices (e.g., devices 112, 116, 120, 122, etc.). The integral sensors 520 may comprise one or more of sensors 342A, 342C described in conjunction with Figs. 4A - 4C. Additionally, or alternatively, the integral sensors 520 may include other sensors 342N as indicated by ellipses 532. For example, the feedback device 108 may include one or more of the sensors 528 ... 560 described as external sensors 524.

The associated device sensors 524 can include any sensors that are associated with a device 112, 116, 120, 122 paired to the feedback device 108 by a network connection 224 or using the bus 356. Accordingly, the external sensors 524 may comprise sensors such as, but are not limited to, thermometers 528, light sensors 536, infrared (IR) light sensors 540, motion sensors 544, wireless network sensors 553, biometric sensors 552, camera (or image) sensors 556, audio sensors 560, and more. It is anticipated that the various sensors associated with these devices 112, 116, 120, 122 can be employed by the feedback device control system 204. For example, a typical smart phone 112 can include an image sensor 556, an IR sensor 540, audio sensor 560, gyroscope 544, accelerometer 544, wireless network sensor 548, fingerprint reader 552, and more. It is an aspect of the present disclosure that one or more of these associated device sensors 524 may be used by one or more subsystems of the feedback system 200

Among other things, the infrared sensors 540 may be used to measure temperatures, form images (especially in low light conditions), identify users 124, and detect motion around the feedback device 108.

Mechanical motion sensors 544 may correspond to encoders, accelerometers, damped masses, and the like. Optionally, the mechanical motion sensors 544 may be adapted to measure the force of gravity (i.e., G-force) as observed by devices 112, 116, 122. Measuring the G-force observed by devices 112, 116, 122 can provide valuable information related to falls, and/or forces that may have been suffered by the user 124. The motion sensors can include accelerometers, gyroscopes, magnetic sensors, and the like that are configured to detect an orientation of a device 112, 116, 122. Data from the motion sensors 544 may be used by the feedback device control system 204 to determine a medical state of the user 124. For example, in one embodiment, if the motion sensor data indicates that the user 124 has not moved within a predetermined period of time, the feedback device control system 204 may determine that the user's medical state is other than conscious, such as asleep.

A wireless network sensor 548 may be configured to detect one or more wireless network(s) available to the feedback device 108 and the feedback system 104. Examples of wireless networks may include, but are not limited to, wireless communications utilizing Bluetooth®, Wi-Fi™, ZigBee, IEEE 802.7, and other wireless technology standards. For example, a mobile hotspot may be detected near the feedback device 108 via the wireless network sensor 548. In this case, the feedback device 108 may determine to utilize and/or share the mobile hotspot detected via/with one or more other devices 112, 116, 120, 122 and/or components associated with the feedback device 108.

Biometric sensors 552 may be included in device 116 and employed to identify and/or record characteristics associated with a user 124. It is anticipated that biometric sensors 552 can include at least one of a heart rate monitor, blood pressure monitor, respiration rate monitor, a dilation monitor, eye movement monitor and the like. Data collected by the biometric sensors may be used by the feedback device control system 204 to determine a medical state, an emotional state, and/or a volume of the user's voice. In one embodiment, when at least one of the user's blood pressure, respiration rate, and heart rate are above predetermined amounts, the control system 204 may determine that the user 124 is not calm. Said another way, the control system may determine that the user 124 is angry or scared based upon blood pressure, respiration rate, and heart rate data. Similarly, the control system 204 may determine the user's medical state based on data received from biometric sensors 552. In one embodiment, when at least one of the user's blood pressure, respiration rate, and heart rate are below predetermined amounts, the control system 204 may determine that the user's medical state is not conscious. Said another way, the control system 204 may determine that the user 124 is not conscious or is asleep when one or more of the user's blood pressure, respiration rate, and heart rate are below predetermined amounts. The control system 204 may also use other data from the biometric sensors 552 when determining the user's medical and emotional states.

Image (or optical) sensors 556 may be associated with devices 112, 122. Optionally, the image sensors 556 include cameras that record still images, video, and/or combinations thereof. The image sensors 556 can collect information associated with the user's eyes, such as eye movement and dilation of the user's pupils. Data regarding the user's eye may be used by feedback device control system 204 to determine emotional states of the user and medical conditions of the user. For example, if the user's eyes remain closed (or do not move) for greater than a predetermined amount of time, the control system 204 may determine that the user is not conscious or is asleep.

The audio sensors 560 may be included in any of devices 112, 116, 120, 122 and may be configured to receive audio input from a user 124 and to sense ambient noise levels. The audio input from the user 124 may correspond to voice commands, conversations of others around the feedback device 108, and/or other audible expressions and noises made in proximity to the feedback device 108. The audio sensors 560 may include, but are not limited to, microphones and other types of acoustic-to-electric transducers or sensors. Optionally, the audio sensors 560 may be configured to receive and convert sound waves into an equivalent analog or digital signal. In one embodiment, an analog to digital converter (ADC) may be associated with one or more of the audio sensors 560.

The sensors 242 may be used alone or in combination with other elements of the feedback system 204 to identify users 124 of the feedback device 108. Optionally, a first sensor (such as sensor 342A) may be located in a different position from a second sensor (such as sensor 342C). The first and second sensors may serve to determine one or more locations associated with various sounds proximate to the feedback device 108. The location of the sounds may be determined based on a comparison of volume levels, intensity, and the like, between sounds detected by the first and second sensors. For instance, the first sensor may be located in a first area and the second sensor may be located in a second area. If a sound is detected at a first volume level by the first sensor and a second, higher, volume level by the second sensor, the sound may be determined to be closer to the second sensor. As can be appreciated, the number of sensors used with the feedback device 108 may be increased (e.g., more than two, etc.) to increase measurement accuracy surrounding sound detection and location, or source of sensor data, such as the source of a sound (e.g., via triangulation, etc.).

For example, in one embodiment, the feedback system 200 may receive sensor data from sensors 242 of other devices 112, 116, 120, 122 associated with the user. Thus, if the user's voice is received by a microphone of another device 112, 116, 120, 122, the feedback system 200 may receive sensor data from the other device. In this manner, the quality and/or quantity of data received and evaluated by the feedback system 200 may be improved.

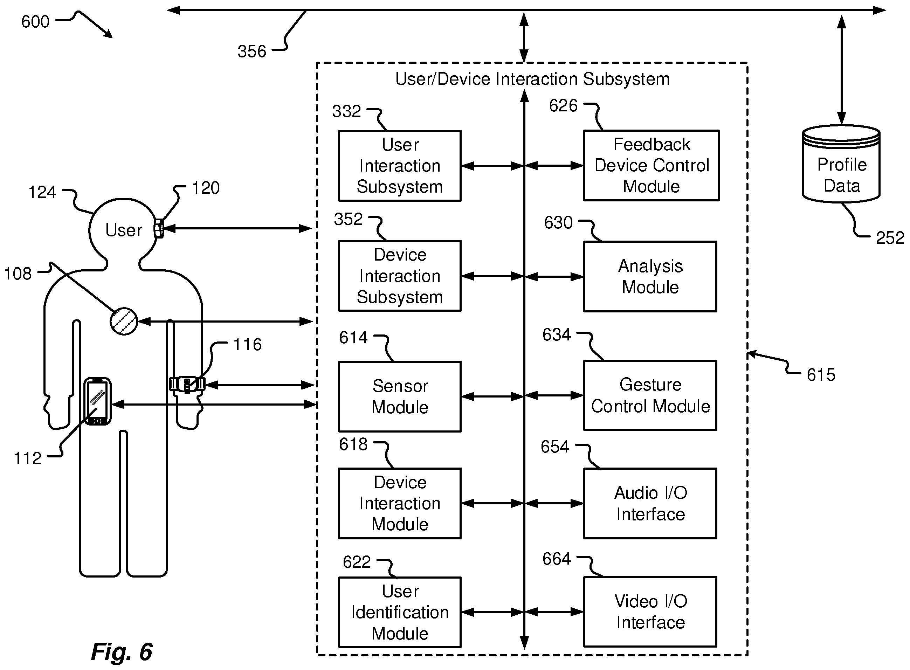

Fig. 6 is a block diagram of an embodiment of a user/device interaction subsystem 615 of a feedback device interface system 600. The user/device interaction subsystem 615 may comprise hardware and/or software that conduct various operations for or with the feedback device 108. These operations may include, but are not limited to, providing information to the user 124, receiving input from the user 124, providing alerts associated with profiles to the user 124, and controlling the functions or operation of the feedback device 108, etc. Among other things, the user/device interaction subsystem 615 may include a computing system operable to conduct the operations as described herein. The user/device interaction subsystem 615 may also include at least one user interaction subsystem 332 and device interaction subsystem 352 as previously described.

Optionally, the user/device interaction subsystem 615 can include one or more of the components and modules provided herein. For instance, the user/device interaction subsystem 615 can include one or more of a sensor module 614, a device interaction module 618, a user identification module 622, a feedback device control module 626, an analysis module 630, a gesture control module 634, an audio input/output interface 654, and a video input/output interface 664. The user/device interaction subsystem 615 may be in communication with other devices, modules, and components of the system 600 via the communications channel 356.

The user/device interaction subsystem 615 may be configured to receive input from a user 124 and/or the feedback device 108 via one or more components of the system. By way of example, a user 124 may provide input to the user/device interaction subsystem 615 via wearable devices 108, 112, 116, 120, audio input (e.g., via a microphone, etc.), gestures (e.g., via at least one image sensor 556, motion sensor 544, etc.), device input (e.g., via a device 108, 112, 116, 120, 122 associated with the user, etc.), combinations thereof, and the like.

A sensor module 614 may be configured to receive and/or interpret input provided by one or more sensors 242 of devices 108, 112, 116, 120, 122. The device interaction module 618 may communicate with the various devices 108, 112, 116, 120, 122 as provided herein.

The user identification module 622 may be configured to identify a user 124 associated with the feedback device 108. The identification may be based on user profile information that is stored in profile data 252 and data structure 704. For instance, the user identification module 622 may receive characteristic information about a user 124 from sensors 242 via a device108, 112, 116, 120, and/or some other input. The received characteristics may be compared to data stored in the profile data 252. Where the characteristics match, the user 124 is identified. As can be appreciated, where the characteristics do not match a user profile, the user identification module 622 may communicate with other subsystems in the feedback system 104 to obtain and/or record profile information about the user 124. This information may be stored in a memory and/or the profile data storage 252. In another example, the user identification module 622 may identify the user 124 based on an input or login received from the user. The user identification data may be stored in portion 712 of data structure 704 described in conjunction with Fig. 7.

The feedback device control module 626 may be configured to control settings, features, and/or the functionality of the feedback device 108. In some cases, the feedback device module 626 can communicate with the feedback device control system 204 to control functions (e.g., alerts, sensor status, processor activity, network connectivity, power usage, display settings, speaker volume) based at least partially on user/device input received by the user/device interaction subsystem 615.

The analysis module 630 can receive sensor data from the sensor module 614. The sensor data may include data associated with the user's voice received from at least one sensor 242. The sensor data also may include data from sounds transmitted through the user's body that are received by sensor 342C positioned proximate to, or in contact with, the user's body 126. The analysis module 630 may also receive and analyze data from sensors 524 of other devices 112, 116, 120, 122. Using the sensor data, the analysis module 614 can determine if a condition specified in a profile created by the user 124 is indicated. In another embodiment, the sensor module 614 compare the sensor data to a normal state of the user defined by a profile 738 such as described in conjunction with Fig. 7. The analysis module 630 can use the sensor data to automatically determine if the sensor data indicates a deviation from the normal state of the user 124. The normal state of the user 124 defined by the profile 738 may include one or more of a normal volume of a voice of the user, a normal emotional state of the user, and a normal medical state of the user. Using the sensor data, the analysis module 630 can determine the emotional state and/or the medical state of the user. The emotional state can include calmness, happiness, anger, fear, and sadness.

The medical state of the user may include consciousness (including being awake, etc.), unconsciousness (including but not limited to being asleep, experiencing a seizure, suffering (or is experiencing) a stroke, etc.), and levels of attentiveness. In this manner, the analysis module 630 may determine that the user 124 is falling asleep, is asleep, is not concentrating, lacks attentiveness, has fainted, is experiencing a stroke, has not moved within a predetermined amount of time, and the like.

The deviation may be associated with the volume of the user's voice. Accordingly, the analysis module 630 may determine the user's voice is too loud or too quiet. This may include a comparison of the volume of the user's voice to ambient noise levels recorded by the sensor 242. When creating a profile associated with a normal voice volume, the user 124 can enter a range in decibels or as a percentage of ambient noise levels in the profile to indicate when the user's voice is too loud or quiet. Optionally, the volume of the user's voice may be too loud when it is about 15% greater than the ambient noise level. Similarly, the volume of the user's voice may be too quiet when it is about 15% less than the ambient noise level. Additionally, or alternatively, the user's voice may be too quiet when it is more than about 10 decibels below the ambient noise level. Similarly, the user's voice may be too loud when it is more than about 10 decibels above the ambient noise level.

In another example, the deviation determined by the analysis module 630 may be associated with an emotional state experienced by the user. The analysis module 630 may determine the emotional state of the user using the sensor data received from the sensor module 614. In one embodiment, the sensor data includes information associated with the user's voice, including frequency, loudness, intensity, change in pitch, pace, and the like. Additionally, or alternatively, the sensor data may include biometric data such as the user's pulse rate, respiration rate, blood pressure, temperature, and movement. The biometric data may also include information about the user's eyes, including eye movements and dilation levels. By analyzing the sensor data, the analysis module 630 can determine the emotional state of the user. Examples of emotional states that may be determined by the analysis module 630 include calmness, happiness, sadness, anger, and fear. In one embodiment, calmness is the normal state of the user 124.

The analysis module 630 can also determine, using the received sensor data, when the user is experiencing a medical condition that deviates from the normal state defined by the profile 738. The medical condition may include a seizure or other loss of consciousness, or unexpected sleep for example by a user 124 with narcolepsy.

The gesture control module 634 is configured to interpret gestures provided by a user 124 of the feedback device 108. Optionally, the gesture control module 634 may provide control signals to one or more components of the feedback system 200. For example, a user 124 may provide gestures to control sensor activity, alerts, communications, networking, and more. Optionally, gestures provided by the user 124 are detected via one or more of the sensors 242 as described herein. As another example, one or more video sensors 556 may receive gesture input from the user 124 and provide the gesture input to the gesture control module 634. Continuing this example, the gesture input is interpreted by the gesture control module 634. This interpretation may include comparing the gesture input to gestures stored in a memory 208, 232, 252. The gestures stored in memory may include one or more functions and/or controls mapped to specific gestures. When a match is determined between the detected gesture input and the stored gesture information, the gesture control module 634 can provide a control signal to any of the systems/subsystems as disclosed herein.

The audio I/O interface 654 is configured to provide signals that are converted into sounds by speakers of devices 108, 112, 116, 120, 122. The signals may be alerts associated with one or more profiles created by the user 124. For example, the audio I/O interface 654 can create signals to provide alerts to the user 124 when the volume of the user's voice is not appropriate based on the environment. The alert may include an audible message that is played by a speaker 128 of device 120 or a speaker of another device 108, 112, 116, 122. The alert may include an audible message such as, but not limited to, "speak louder," "speak quieter," when the user's voice deviates from the normal state defined by a profile 738. Similarly, when the user's emotional state deviates from the normal state defined by a profile 738, the audio I/O interface 654 may provide signals to generate an alert selected by the user for that emotional state. Accordingly, the alert may include an audible message such as "calm down," "stay calm," "you are angry," and the like. The content of the audible alert may be determined by the user when creating the profile 738. In one embodiment, the audible alert may be a recording of the user's voice that is stored in memory 208, 252. In this manner, the user may create one or more audible messages associated with profiles 738 that the feedback device control system 204 can retrieve and play using the audio I/O interface 654 when a deviation from a normal state of the user is identified.

The audio I/O interface 654 can also receive audible inputs collected by sensors 242 and convert the audible inputs into a digital signal. The audio I/O interface 654 can then transmit the digital signal to one or more components of the feedback system 200 for additional processing. The digital signal associated with the alerts may be related to a song or any other audible sound.

The video I/O interface 664 can send commands to produce a visual display on displays of devices 108, 112, 116, 120, 122. The commands may provide a visual display using indicator 152 of the feedback device 108. Additionally, or alternatively, the video I/O interface 664 may provide commands to create a graphical display on devices 112, 116, 122 which may be larger, and include a better display capability, than the indicator 152 of feedback device 108. In this manner, the video I/O interface 664 can generate visual alerts in response to a profile created by the user 124.

Fig. 7 shows an embodiment of a data structure 700 to store data related to users 740A, 740B of the feedback device 108. The data structure 700 may include one or more of data files or data objects 704. Thus, the data structure 700 may represent different types of databases or data storage, for example, object-oriented data bases, flat file data structures, relational database, or other types of data storage arrangements. Embodiments of the data structure 700 disclosed herein may be separate, combined, and/or distributed. As indicated in Fig. 7, there may be more or fewer portions in the data structure 700, as represented by ellipses 744. Further, there may be more or fewer files in the data structure 700, as represented by ellipses 748.

The data file 704 may include several portions 708-746 representing different types of data. Each of these types of data may be arranged as records 740A, 740B associated with users 124A, 124B, as shown in portion 708.

There may be one or more user records 740 and associated data stored within the data file 704. As provided herein, the user 124 can be any person that uses the feedback device 108. The user 124 may be identified in portion 712. For the feedback device 108, the user may include a set of one or more features that may identify the user. These features may be the physical characteristics of the user that may be identified by facial recognition or some other type of system. In one embodiment, these characteristics include voice data stored in portion 736 that may be used to identify the user's voice. In other situations, the user 124 may provide a unique code to the feedback device control system 204 or provide some other type of data that allows the feedback device control system 204 to identify the user. The features or characteristics of the user are then stored in portion 712.

One or more settings may be stored in portion 724. These settings 724 may be the configurations of different functions of the feedback device 108 that are specified by or for that user 124. For example, the settings 724 may be a preferred alert type or duration, or some other type of setting associated with the feedback device 108.

The sensors 242 within the feedback device 108 may be able to either obtain or track health data in portion 728. Health data 728 may include any type of physical characteristic associated with the user. For example, a heart rate, a blood pressure, a temperature, a respiration rate, or other types of heath data may be obtained and stored in portion 728. The user may have this health data tracked over a period of time to allow for statistical analysis of the user's health while operating the feedback device 108. In this manner, the analysis module 630 may determine that the medical state of the user has deviated from a normal state. If some function of the user's health deviates from a norm (e.g., a baseline measurement, average measurements taken over time, and the like), the feedback system 200 may be able to determine a medical state of the user and react to that data. Thus, the feedback device control system 204 can monitor data received from the sensors 242 and determine when the user 124 is experiencing a health related condition.

In one embodiment, the user may create a profile 738 associated with a normal medical state. The health data 728 may be compared to sensor data by the analysis module 630 to automatically determine when the sensor data indicates a deviation from the normal state of the profile. The deviation from the normal state may be an abnormal state associated with a health condition experienced by the user 124. The health condition may be a recurring condition, such as a seizure or other loss of consciousness, lack of concentration or attentiveness, or unexpected sleep such as associated with narcolepsy. The profile 738 for the health condition may include an associated alert. When the feedback system 200 determines the user is experiencing a health condition associated with a profile, or when the sensor data indicates a deviation from the normal state, the feedback system 200 may provide the alert.

The health data 728 may also be used by the analysis module 630 to determine an emotional state of the user 124. For example, in one embodiment, at least one of the user's pulse, respiration, blood pressure, heart rate, and temperature may be used by the analysis module 630 to determine the user's emotional state is one of calm, happy, angry, afraid, and sad.

One or more gestures may be stored in portion 732. The gestures may be configurable by the user 124. For example, gestures may be determined or created by the user 124 and stored in portion 732. Gestures related to user inputs to the feedback device 108 may be determined or captured and then stored with their characteristics (e.g., vector, position of gesture, etc.) in portion 732.

One or more sets of voice data may be stored in portion 736. The voice data may be samples of the voice of a user 740. In one embodiment, the voice samples in portion 736 may be collected by sensors 242 in response to prompts from the feedback device 108. In this manner, the feedback device 108 may be trained to recognize the voice of a user 740. Similarly, the user 124 may record voice messages stored in portion 736 that are associated with profile 736. In one example, the user may record a voice message, such as "speak louder" associated with a profile defining the minimum volume of the user's voice. Another voice message such as "speaker quieter" may be recorded and stored in portion 738 that is associated with a profile for the maximum volume of the user's voice. The audio I/O interface module 654 may retrieve voice messages stored in portion 738 for playback as an alert by a speaker of a device 108, 112, 116, 120, 122.

The user identification module 622 can use the voice data 736 to identify users 124 of the feedback device 108. The voice data can also include voice samples associated with normal states of the user and abnormal states of the user. Accordingly, the voice data 736 may include sensor data associated with the user's speech when the user is speaking in a normal state (such as an appropriate volume) and when the user's speech is abnormal (such as too loud, too quiet, slurred, too fast, etc.). The voice data 736 may also include samples of the user's speech associated with emotional states, such as when the user is angry, afraid, happy, and calm. Similarly, the voice data 736 may include information related to the user's voice when the user is experiencing an abnormal medical state, such as diminished concentration, sleepiness, or the onset of a physiological condition, such as a seizure or a stroke.

The feedback device 108 may also assign an emotional state of the user 124 to the voice data stored in portion 736. Emotional states including calmness, happiness, sadness, anger, and fear may be assigned to each set of voice data in portion 736. The analysis module 630 may determine the emotional states based on characteristics of the user's voice, including intensity, pitch, pace, frequency, loudness (for example, in decibels), speech cadence, spectral content, micro tremors. Optionally, the analysis module 630 may also use biometric data from sensors 552 when determining the user's emotional state as described herein.

Additionally, or alternatively, the user 740 may review the voice data and assign (or change) an emotional state to one or more of the stored voice samples in portion 736. For example, if the feedback system 200 determines a sample of the user's voice is associated with the emotional state of fear, the user 124 may review the sample and change the emotional state associated with the sample to a different emotional state.

In one embodiment, the user 124 can train the feedback device 108 by associating one of the emotional states with a sample of the user's voice 736 associated with that state. For example, the feedback device 108 may record a first sample of the user's voice when the user 124 is experiencing a first emotional state. The first sample can be saved in voice data 736. In one embodiment, the feedback device control system 204 may analyze the first sample and determine that the first sample is associated with the first emotional state. In another embodiment, the user 124 may associate the first sample with the first emotional state. The user 124 may then record other voice samples until voice data 736 includes a sample of the user's voice for each emotional state, including calmness, happiness, sadness, anger, and fear.

Information corresponding to a user and/or a user profile may be stored in the profile information portion 738. The profile information 738 may include data relating to profiles of the user. The profile information 738 may include rules created by the user 740 associated with the user's voice, an emotional state of the user, and health states of the user. The user 124 can define a normal state in the profile portion. In one embodiment, the user can define parameters associated with deviations from the normal state. The normal state of the user 124 may include one or more of a normal range of volume for the user's voice, a normal emotional state of the user, and a normal medical state of the user.

As an example, profiles 738 may be generated based for one or more of user preferences (e.g., maximum voice volume, minimum voice volume, emergency or duress words or codes, medical conditions, emotional states, feedback settings, and the like). The profiles may be determined based on biometric data, audio data, and the like received from sensors 242.

Accordingly, the profile information 738 may define parameters for when the feedback device 108 is to provide an alert to the user related a deviation from the normal state. The deviation may be related to one or more of the user's voice, the emotional state of the user, and the health state of the user.

The user 740 may also create a rule associated with the profile 738 that describes how to provide an alert. The alert may be specific to each deviation from the normal state of the user. Each alert may include one or more of haptic feedback, visual feedback, audible feedback, and graphical feedback (such a message displayed on a display of device 112, 116). Additionally, the alert may include activating or deactivating a feature of a device 108, 112, 116, 120, 122. Further, the alert may include contacting or sending a message to another person, such as by device 112 calling, emailing, or sending a text message to another person or another device using network 224.

One profile 738 of the user 124 can be to receive an alert when data collected by sensors 242 indicates the emotional state of the user 124 is angry. Said another way, when the analysis module 630 determines that the user's emotional state has deviated from a normal state of calm and the current emotional state is angry, the feedback device 108 may generate an alert associate with anger. In this manner, the feedback device control system 204 can provide the alert to notify the user 124 of the indicated emotional state. The alert may also be selected by the user when creating the profile to remind the user 124 to calm down. The profile 736 may also specify that when the user 124 is angry, an alert should be provided to another person, such as a parent, spouse, or a friend.

One or more additional data fields may be stored in the linked data portion 742 as data and/or locations of data. The linked data 742 may include at least one of pointers, addresses, location identification, data source information, and other information corresponding to additional data associated with the data structure 700. Optionally, the linked data portion 742 may refer to data stored outside of a particular data structure 700. For example, the linked data portion 742 may include a link/locator to the external data. Continuing this example, the link/locator may be resolved (e.g., via one or more of the methods and/or systems provided herein, etc.) to access the data stored outside of the data structure 700. Additionally or alternatively, the linked data portion 742 may include information configured to link the data objects 704 to other data files or data objects.

Information corresponding to devices 112, 116, 120, 122 associated with the feedback device 108 may be stored in device data 746. There may be one or more device records and associated data stored within the data file portion 746. As provided herein, devices 112, 116, 120, 122 may be any device that is associated with the feedback device 108. For example, devices 112, 116, 120, 122 may be associated with feedback device 108 when that device is physically connected to the feedback device 108. As another example, devices 112, 116, 120, 122 may be wirelessly associated with feedback device 108 when the devices 112, 116, 120, 122 register with the feedback device 108.

Registration may include pairing the devices 112, 116, 120, 122 with the feedback device 108. In some cases, the registration of devices 112, 116, 120, 122 with feedback device 108 may be performed manually and/or automatically. Automatic registration can include detecting that one or more of devices 112, 116, 120, 122 is within physical proximity of feedback device 108. Upon detecting that device 112, 116, 120, 122 is physically near feedback device 108, the feedback system 104 may identify device 112, 116, 120, 122 and determine whether the device is or should be registered. Registration may be performed with feedback device 108 via providing a unique code to at least one of devices 112, 116, 120, 122. Associated devices 112, 116, 120, 122 may be identified in portion 746. Among other things, device identification may be based on the hardware associated with the device (e.g., Media Access Control (MAC) address, Burned-In Address (BIA), Ethernet Hardware Address (EHA), physical address, hardware address, and the like).

Optionally, a feedback device 108 may be associated with one or more users. Accordingly, portion 746 may store device data, such as log-in information and passwords, to pair feedback device 108 with multiple different devices 112, 116, 120, 122 of different users 124. Optionally, the user 124 may provide a unique code to the device, or provide some other type of data, that allows feedback device 108 to pair with the other device 112, 116, 120, 122. These codes are then stored in portion 746.

Each device 112, 116, 120, 122 identified in the device data portion 746 may have a different set of settings for use with feedback device 108. Thus, each set of settings may also be stored in portion 746. Further, one or more preferences for devices 112, 116, 120, 122 may be stored in portion 746. These settings may be similar and/or identical to those previously described. For example, the settings may provide for how a device 112, 116, 120, 122 is configured for use with a particular user.

Optionally, the capabilities of a device 112, 116, 120, 122 may also be stored in portion 746. Examples of device capabilities may include, but are not limited to, a communications ability (e.g., via wireless network, EDGE, 3G, 4G, LTE, wired, Bluetooth®, Near Field Communications (NFC), Infrared (IR), etc.), hardware associated with the device (e.g., cameras, gyroscopes, accelerometers, touch interface, processor, memory, display, etc.), software (e.g., installed, available, revision, release date, etc.), firmware (e.g., type, revision, etc.), operating system, system status, and the like. Optionally, the various capabilities associated with devices 112, 116, 120, 122 may be controlled by one or more of the feedback systems 200 provided herein. Among other things, this control allows the feedback system 200 to leverage the power and features of various devices 112, 116, 120, 122 to collect, receive, transmit, and/or process data.

One or more priorities for devices 112, 116, 120, 122 may also be stored in portion 746. The priority may correspond to a value, or combination of values, configured to determine how a device 112, 116, 120, 122 interacts with the feedback device 108 and/or its various systems. The feedback device 108 may determine that, although other devices are found near or connected with the feedback device 108, the device 112, 116, 120, 122, having the highest priority (or having the most useful features), has priority for pairing with the feedback device 108. These features may include sensors 242, processor capabilities, communication capabilities, memory, and the like. Additionally, or alternatively, the priority may be based on a particular user associated with the device 112, 116, 120, 122. Optionally, the priority may be used to determine which device 112, 116, 120, 122 will control a particular signal, or provide an alert.

Registration data for each device 112, 116, 120, 122 may also be stored in portion 746. As described above, when a particular device 112, 116, 120, 122 registers with a feedback device 108, data related to the registration may be stored in portion 746. Such data may include, but is not limited to, registration information, registration codes, initial registration time, expiration of registration, registration timers, and the like. Optionally, one or more systems of the feedback system 200 may refer to the registration data in portion 746 to determine whether a device 112, 116, 120, 122 has been previously registered with feedback device 108.

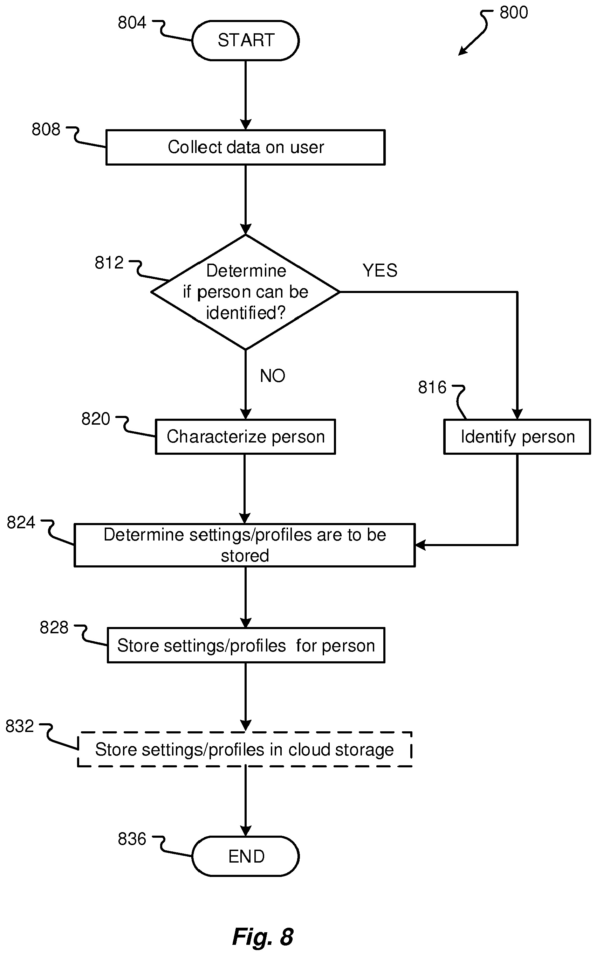

Referring now to Fig. 8, an embodiment of a method 800 for storing settings 724 and profiles 738 for a user 124 associated with feedback device 108 is shown. While a general order for the steps of the method 800 is shown in Fig. 8, the method 800 can include more or fewer steps or can arrange the order of the steps differently than those shown in Fig. 8. Additionally, although the operations of the method 800 may be described or illustrated sequentially, many of the operations may in fact be performed in parallel or concurrently. Generally, the method 800 starts with a start operation 804 and ends with an end operation 836. The method 800 can be executed as a set of computer-executable instructions executed by a computer system and encoded or stored on a computer readable medium. Hereinafter, the method 800 will be explained with reference to the systems, components, modules, software, data structures, user interfaces, etc. described in conjunction with Figs. 1-7.

A user 124 may activate the feedback device 108. One or more sensors 242 may then collect data on the user 124 in step 808. For example, sensors 242 may collect data on the user's voice. The sensors 242 may send collected data to the processor 304 of the feedback device 108. If the received voice data matches the voice data 736, the feedback device control system 204 may then identify the person, in step 812.

In one embodiment, the feedback device control system 204 can receive the information from the sensors 242. The user identification module 622 may then compare the received voice data with voice data 736 in data structure 704. The sensor data may be compared to ID characteristics 712 to determine if the person has already been identified. The feedback device control system 204 may also send the characteristic data from the sensors to the communication network 224 to a server 228 to compare the sensor data to stored data 232 that may be stored in a cloud system. The user's voice can be compared to stored features 712 and voice data 736 to determine if the person that activated the feedback device 108 can be identified.

If the person has been identified previously and their characteristics stored in portion 712, the method 800 proceeds YES to step 816 where that person may be identified. In identifying a person, the information associated with that person 740 may be retrieved and provided to the feedback device control system 204 for further action. If a person cannot be identified by finding their sensor characteristics in portion 712, the method 800 proceeds NO to step 820.

In step 820, the feedback device control system 204, using an application, may create a new record 740 in table 700 for the user 124. This new record may store a user identifier and characteristics 712. The new record 740 may then be capable of receiving new settings data 724 for this particular user 124. In this way, the feedback device 108 can automatically identify or characterize a person so that settings may be established for the person using the feedback device 108.

The I/O module 312 may then determine if settings 724 and/or profiles 738 are to be stored, in step 824. Settings 724 might be any configuration of the feedback device 108 that may be associated with the user 124. The profiles 738 may define a normal state of the user 124. The normal state of the user 124 may include, but is not limited to, one or more of: a normal volume of a voice of the user; a normal emotional state of the user; and a normal medical state of the user.

The normal volume of the user's voice may comprise a minimum volume and a maximum volume. In one embodiment, the minimum and maximum volumes are expressed as a percentage of an ambient noise level. Additionally, or alternatively, the minimum and maximum volumes can be expressed as a difference in decibels from the ambient noise level. In one example, the normal volume is defined as within about 14 decibels of the ambient noise level. In another embodiment, the normal volume is defined as within about 10 decibels of the ambient noise level. In still another embodiment, the normal volume is defined as within about 5 decibels of the ambient noise level. In this manner, the analysis module 630 can determine that the user's voice has deviated from the normal state (or is abnormal) when the volume of the user's voice is above or below the ambient noise level by a predetermined 14 decibels, 10 decibels, or 5 decibels.

In one embodiment, the normal emotional state of the user can be defined as one of calm, happy, sad, fear, and anger. In another embodiment, the normal emotional state is calm. Accordingly, the analysis module 630 can determine that the user's emotional state has deviated from the normal state (or is abnormal) when the user is one of happy, sad, angry, and afraid.

In one embodiment, the normal medical state of the user 124 can be defined as one of conscious, unconscious, attentive, and not attentive. In one embodiment, the normal medical state of the user 124 is conscious. Accordingly, the analysis module 630 can determine that the user's medical state is not normal (or is abnormal) when the user 124 is one of unconscious and not attentive.

The determination 824 may be made after receiving a user input from the user 124. For example, the user 124 may make a selection using button 148 indicating that settings 724 and profiles 738 currently made are to be stored. The user may also provide an input using an input system of device 112, 116, 120, 122. In other situations, a period of time may elapse after the user 124 has made a configuration. After determining that the user 124 is finished making changes to the settings 724 and profile 738, based on the length of the period of time since the setting or profile was established, the feedback device control system 204 can save the setting or profile. Thus, the feedback device control system 204 can make settings and monitor profiles automatically based on reaching a steady state for settings and profiles for user 124.

The feedback device control system 204 may then store the settings and profiles for the person, in step 828. The user interaction subsystem 332 can make a new entry 740 for the user 124 in data structure 704. The new entry may be either a new user, a new setting listed in settings 724, and/or a new profile listed in profile information 738. As explained previously, the settings 724 can be any kind of configuration or user preferences of the feedback device 108 that may be associated with the user 124.

The settings 724 and profile 738 may also be stored in cloud storage, in step 832. Thus, the feedback device control system 204 can send the new or changed settings 724 or profiles 738 to the server 228 to be stored in storage 232. In this way, the settings 724 and profiles 738 in storage system 232 may be retrieved, if local storage does not include the settings in storage system 208.

Additionally, or alternatively, the settings 724 may be stored in profile data 252. As provided herein, the profile data 252 may be associated with one or more devices 112, 116, 120, 122, servers 228, feedback device control systems 204, and the like. Optionally, the settings in profile data 252 may be retrieved in response to conditions. For instance, the settings 724 may be retrieved from at least one source having the profile data if local storage does not include the settings in storage system 208. As another example, a user 124 may wish to transfer settings stored in profile data 252 to the system data 208. In any event, the retrieval and transfer of settings 724 may be performed automatically via one or more devices 112, 116, 120, 122, associated with the feedback device 108.

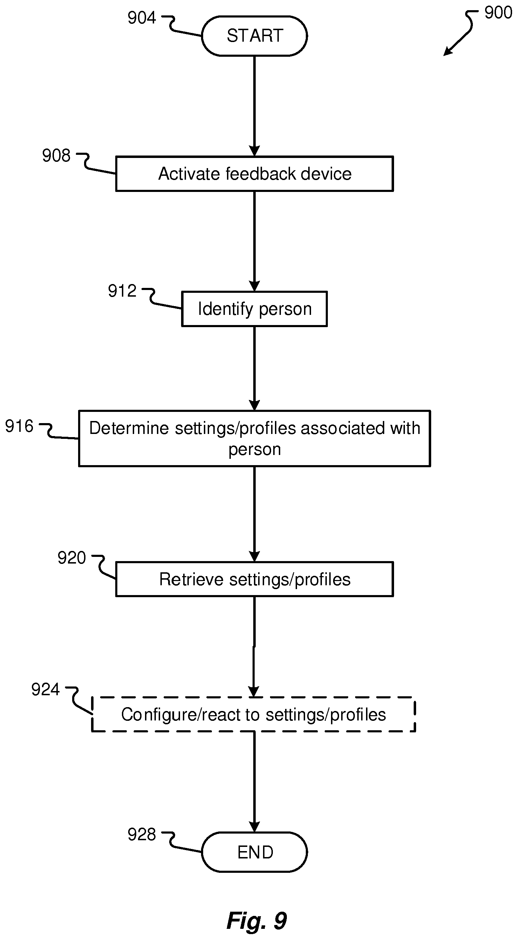

An embodiment of a method 900 to configure the feedback device 108 based on stored settings 724 and profiles 738 is shown in Fig. 9. A general order for the steps of the method 900 is shown in Fig. 9. Generally, the method 900 starts with a start operation 904 and ends with an end operation 928. The method 900 can include more or fewer steps or can arrange the order of the steps differently than those shown in Fig. 9. Additionally, although the operations of the method 900 may be described or illustrated sequentially, many of the operations may in fact be performed in parallel or concurrently. The method 900 can be executed as a set of computer-executable instructions executed by a computer system and encoded or stored on a computer readable medium. Hereinafter, the method 900 shall be explained with reference to the systems, components, modules, software, data structures, user interfaces, etc. described in conjunction with Figs. 1-8.

The feedback device 108 is activated by a user 124 in step 908. This activation may be performed providing an input to the feedback device 108, such as by pressing a button 148, by a movement of the feedback device 108 sensed by a motion sensor 242, or by a voice command received by a voice sensor 242. The feedback device 108 can identify the user 124 in operation 912, for example, as described in method 800.

The feedback device control system 204 can obtain characteristics for the user 124 and compare those characteristics to the identifying features in portion 712 of data structure 704. Thus, the settings in portion 724 and profiles 738 may be retrieved after identifying the user. The feedback device control system 204 can first determine if there are settings and profiles associated with the identified user 124 in step 916.

After identifying the user 124 by matching characteristics with the features in portion 712, the feedback device control system 204 can determine if there are settings and profiles associated with the user 124 in portions 724, 738 of data structure 704. If there are settings or profiles, then the feedback device control system 204 can make the determination that there are settings in portion 724 or profiles in portion 738, and the feedback device control system 204 may then read and retrieve those settings and/or profiles, in step 920.

The settings 724 may be then used to configure the feedback device 108 to the user 124, in step 924. The settings 724 may be obtained to change the configuration of the feedback device 108 or components of the feedback system 200. Settings 724 can configure how sensors 242 of the feedback device 208 operate, how alerts are performed, which devices 112, 116, 120, 122 associated with the user 124 are available for paring, or how other different configurations are made.

The profile information retrieved from portion 738 can be used to determine how the feedback system 200 responds to events. The profile information 738 may include profiles related to the user's speech and rules associated with the profiles, such as which alerts are associated with each profile. Profile 738 may also be retrieved related to an emotional state or a health state of the user 124. As described herein, the profiles 738 may define a normal state of the user, including a normal volume of the user's voice, a normal emotional state of the user, and a normal medical state of the user. The profiles 738 may require configuration of sensors 242 such as activation or certain sensors as well as sample rates for the sensors required for the feedback device control system 204 to determine the presence of a condition associated with one or more of the profile 738 including a deviation from the normal state of the user. The analysis module 630 may request data from sensors required to determine if a condition associated with deviation from a normal state defined by a profile 738 is being experienced by the user 124.

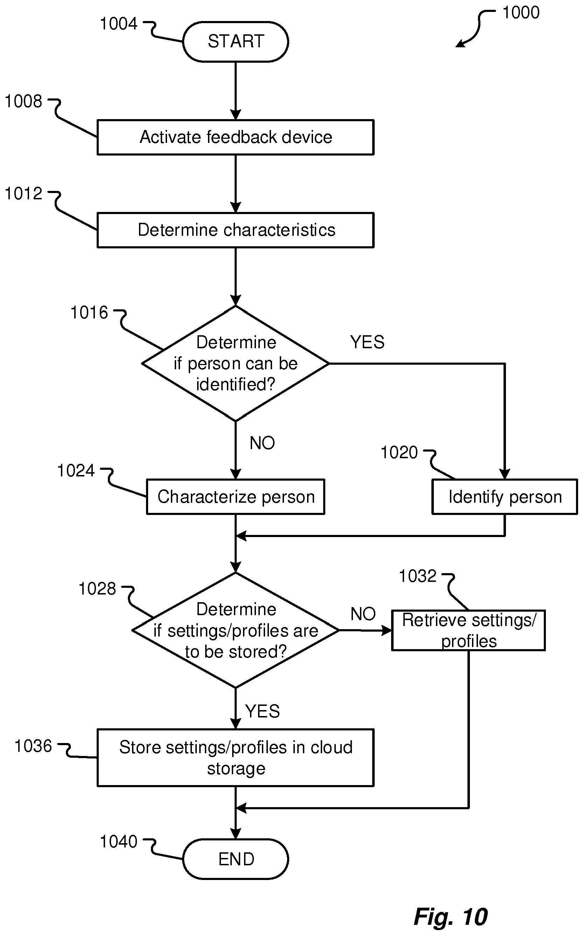

Embodiments of a method 1000 for storing settings and profiles in storage are shown in Fig. 10. A general order for the steps of the method 1000 is shown in Fig. 10. Generally, the method 1000 starts with a start operation 1004 and ends with an end operation 1040. The method 1000 can include more or fewer steps or can arrange the order of the steps differently than those shown in Fig. 10. Additionally, although the operations of the method 1000 may be described or illustrated sequentially, many of the operations may in fact be performed in parallel or concurrently. The method 1000 can be executed as a set of computer-executable instructions executed by a computer system and encoded or stored on a computer readable medium. Hereinafter, the method 1000 shall be explained with reference to the systems, components, modules, software, data structures, user interfaces, etc. described in conjunction with Figs. 1-9.

The feedback device 108 may be activated in step 1008 as described in methods 800, 900. As explained previously, the feedback device control system 204 can receive sensor data from sensors 242. Using the sensor data, the feedback device control system 204 can determine characteristics of the person, in step 1012. These characteristics are compared to the features in portion 712 of the data structure 704. From this comparison, the feedback device control system 204 can determine if the person is identified within the data structure 704, in step 1016. If there is a comparison and the person can be identified, the method 1000 proceeds YES to step 1020. However, if the person cannot be identified, the method 1000 proceeds NO, to step 1024.

In step 1020, the person is identified in portion 708 by the successful comparison of the characteristics and the features 712. It should be noted that there may be a degree of variability between the characteristics and the features in portion 712. Thus, the comparison may not be an exact comparison but may use methods known in the art to make a statistically significant comparison between the characteristics received from the sensors 242 and the features stored in portion 712. In step 1024, the characteristics received from sensors 242 are used to characterize the person. In this way, the received characteristics may be used as an ID, in portion 712, for a new entry for a new user in portion 708.

The user 124 may make one or more settings 724 or profiles 738 for the feedback device 108. The feedback device control system 204 may determine if the settings or profiles are to be stored, in step 1028. If the settings/profiles are to be stored, the method 1000 proceeds YES to step 1036. If the settings/profiles are not to be stored or if there are no settings or profiles to be stored, the method 1000 proceeds NO to step 1032. In step 1032, the feedback device control system 204 can retrieve the settings in portion 724 and/or the profiles in portion 738 of the data structure 704.

If settings or profiles are to be stored, the feedback device control system 204 can send those settings and/or profiles to server 228 to be stored in data storage 232, in step 1036. Data storage 232 acts as cloud storage that can be used to retrieve information on the settings and profiles. Thus, the cloud storage 232 allows for permanent and more robust storage of user preferences for the settings and profiles of the feedback device 108.

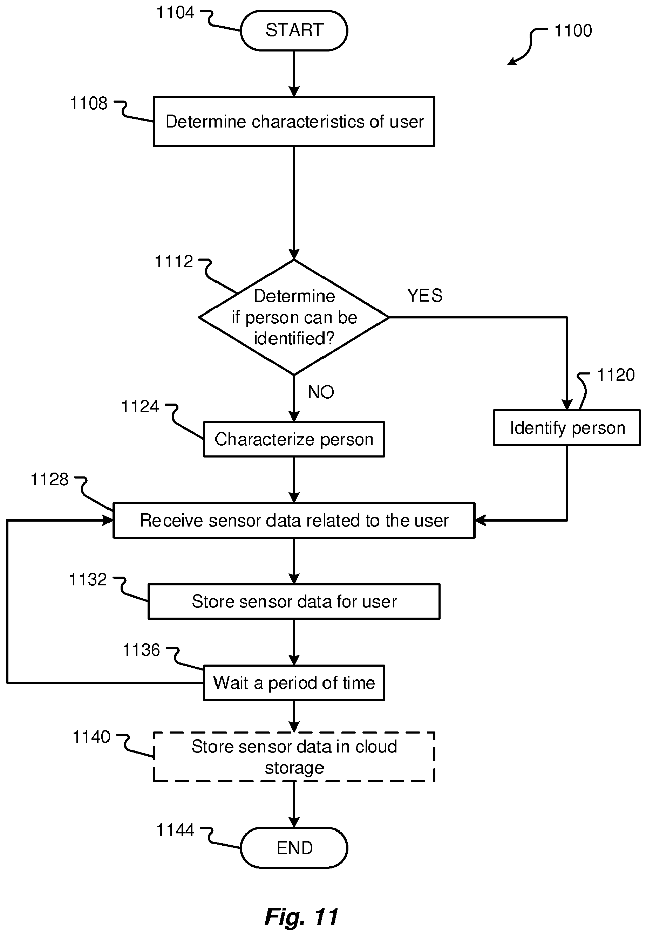

An embodiment of a method 1100 for storing user data may be as shown in Fig. 11. A general order for the steps of the method 1100 is shown in Fig. 11. Generally, the method 1100 starts with a start operation 1104 and ends with an end operation 1144. The method 1100 can include more or fewer steps or can arrange the order of the steps differently than those shown in Fig. 11. Additionally, although the operations of the method 1100 may be described or illustrated sequentially, many of the operations may in fact be performed in parallel or concurrently. The method 1100 can be executed as a set of computer-executable instructions executed by a computer system and encoded or stored on a computer readable medium. Hereinafter, the method 1100 shall be explained with reference to the systems, components, modules, software, data structures, user interfaces, etc. described in conjunction with Figs. 1-10.

Feedback device control system 204 can receive sensor data from sensors 242. The sensor data may be used to determine characteristics of the user in step 1108. From the characteristics, the feedback device control system 204 can determine if a person may be identified in data structure 704, in step 1112, for example, as described in methods 800, 900. If it is determined that the person can be identified in step 1112, the method 1100 proceeds YES to step 1120. If the person cannot be identified, the method 1100 proceeds NO to step 1124.

A person may be identified by matching the characteristics of a person from the sensor data to the features shown in portion 712. If these comparisons are statistically significant, the person may be identified in portion 708, in step 1112. However, if the person is not identified in portion 708, the feedback device control system 204 can characterize the person using the sensor data, in step 1124. In this way, the feedback device control system 204 can create a new record for a new user in data structure 704.

Thereinafter, the feedback device control system 204 may receive sensor data related to the user from the sensors 242, in step 1128. The sensor data may comprise data associated with the user's voice collected by sensors 342A, 342C or by external sensors 524, such as microphones, of paired devices 112, 116, 120, 122. The voice data may include one or more of intensity, pitch, pace, frequency, and loudness (for example, in decibels), speech cadence, spectral content, micro tremors and any other information related to the user's voice. The data may include information about the user's voice that is received by a sensor 342C proximate (or adjacent to) the user's body. In this manner, sensor 342C may collect data related to the user's voice that has been transmitted through the user's body.

The feedback device control system 204 can store the data collected by the sensors 242, in step 1132. In one embodiment, the sensor data is stored in portion 736 of data structure 704. The sensor data may be used to provide a baseline data pattern for the user 124. For example, the sensor data related to the user's voice may be analyzed by a processor 304 of the feedback device control system 204 to determine an emotional state of the user 124. The processor 304 may execute the user identification module 622 and/or the analysis module 630 to characterize the voice data. The feedback device control system 204 may then associate the sensor data with the emotional state in portion 736 and with a medical state in portion 728 of data structure 704, in step 1132.

The feedback device control system 204 may then wait a period of time, in step 1136. The period of time may be any amount of time from seconds to minutes to days. Thereinafter, the feedback device control system 204 can receive new data from sensors 242, in step 1128. Thus, the feedback device control system 204 can receive data periodically and update or continue to refine the voice data and parameters associated with the user's voice in portion 736 of data structure 704. Thereinafter, the feedback device control system 204 may optionally save the sensor data in cloud storage 232 by sending it through the communication network 224 to the server 228, in step 1140.

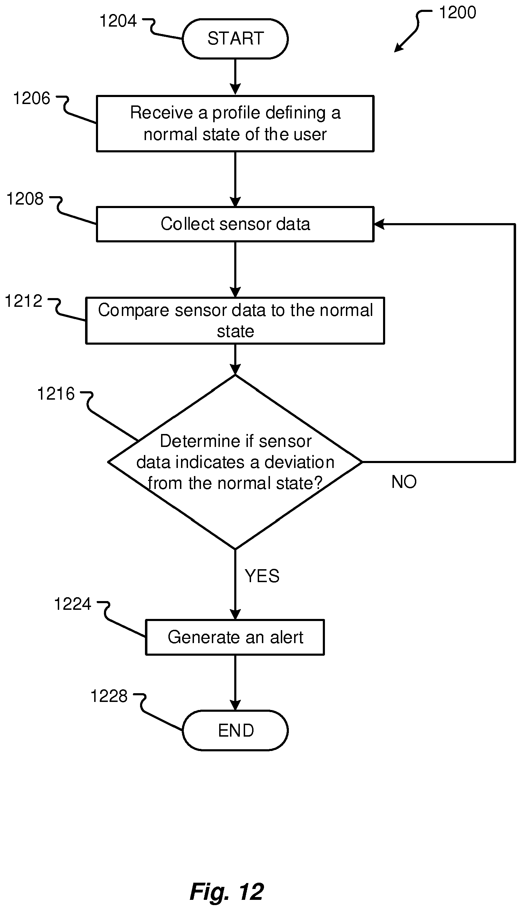

An embodiment of a method 1200 of providing an alert to a user in response to a deviation from a normal state of the user may be as shown in Fig. 12. A general order for the steps of the method 1200 is shown in Fig. 12. Generally, the method 1200 starts with a start operation 1204 and ends with an end operation 1228. The method 1200 can include more or fewer steps or can arrange the order of the steps differently than those shown in Fig. 12. Additionally, although the operations of the method 1200 may be described or illustrated sequentially, many of the operations may in fact be performed in parallel or concurrently. The method 1200 can be executed as a set of computer-executable instructions executed by a computer system and encoded or stored on a computer readable medium. Hereinafter, the method 1200 shall be explained with reference to the systems, components, modules, software, data structures, user interfaces, etc. described in conjunction with Figs. 1-11.

The feedback device control system 204 can receive a profile defining a normal state of the user in operation 1206. The profile may be received as described in methods 800 - 1000. In one embodiment, the profile may be received from a user. Additionally, or alternatively, the profile may retrieved from memory associated with portion 738 of data structure 700. The normal state may be stored in profile information 738. The analysis module 630 can retrieve the profile defining the normal state from portion 738 of data structure 704. As described herein, the normal state may define a normal volume of a voice of the user 124, a normal emotional state of the user, and a normal medical state of the user.

Additionally, or alternatively, the normal volume of the user's voice may be defined in a profile 738 as a minimum and a maximum volume. In one embodiment, the minimum and maximum volume of the user's voice are defined in relation to an ambient noise level collected by a sensor 242. In another embodiment, the minimum volume for the user's voice is no more than about 10 decibels below the ambient noise level and the maximum volume for the user's voice is no more than about 10 decibels above the ambient noise level. In another embodiment, the normal volume of the user's voice is between about 5 decibels below and about 5 decibels above the ambient noise level. Optionally, in one embodiment, the user's normal emotional state is calm. Additionally, or alternatively, in another embodiment, the user's normal medical state is conscious.

The feedback device control system 204 can collect data related to the user 124 from sensors 242 in step 1208. The data may comprise information related to the user's voice or speech. In one embodiment, the sensor data comprises one or more of intensity, pitch, pace, frequency, and loudness (for example, in decibels), speech cadence, spectral content, micro tremors and any other information related to the user's voice recorded by one or more sensors 242. The sensor data may also include biometric data, such as pulse rate, respiration rate, temperature, blood pressure, movement of the user, and information about the user's eyes from the sensors 242. In one embodiment, the sensor data includes data received from a device 112, 116, 120, 122 in communication with the feedback device 108. In one embodiment, the sensor data includes a volume of the user's voice. In another embodiment, the sensor data include an ambient noise level. Optionally, in one embodiment, the sensor comprises at least one sensor 342A, 342C of the feedback device 108. Additionally, or alternatively, the sensor may include one or more sensors 242 of devices 112, 116, 120, 122.

The analysis module 630 may then compare the collected sensor data to the normal state defined by the profile 738 in operation 1212. In this manner, the analysis module 630 can determine the whether the sensor data is associated with a deviation from the normal state defined in profile 738 in data structure 704. The analysis module 630 may compare the volume of the user's voice to ambient noise levels to determine if the user's voice is too loud or too quiet. By evaluating one or more of the pitch, pace, frequency, volume, cadence, and micro tremors included in the user's voice, the analysis module 630 can determine if the user's emotional state is one of calm, happy, sad, angry, and fearful.

Additionally, or alternatively, the analysis module 630 may compare the received data to stored information in portion 728 and/or portion 736, in step 1212. The comparison may check if there is statistically significant match between the received voice data and the stored data. Thus, the analysis module 630 can make a comparison of the user's voice or other characteristic based on a baseline of health data previously stored in portion 728 and/or voice data previously stored in portion 736 of data structure 704. The comparison can be used to determine, or to help determine, an emotional state of the user. The comparison may also be used to determine if the user's voice is too loud or too quiet based on a profile in portion 738. Additionally, the comparison can be used to determine if the user 124 is experiencing a health condition related to a profile 738. Health conditions include one or more of a stroke, unexpected sleep (such as associated with narcolepsy), loss of consciousness, and other medical states that may be determined by the feedback device control system 204.

In operation 1216, the analysis module 630 determines if the sensor data indicates a deviation from the normal state defined by a profile 738 of data structure 704. For example, the analysis module 630 can determine whether an emotional state of the user 124 associated with data collected by the sensors 242 deviates from a normal emotional state.

In one embodiment, the emotional state of the user is abnormal, or deviates from the normal state, when the emotional state is one of anger and fear. In another embodiment, the analysis module 630 can determine the medical state of the user is abnormal (or deviates from the normal state) when the sensor data indicates that the user is not conscious.

Additionally, or alternatively, the analysis module 630 can determine if the voice data collected by the sensors 242 indicates the user is speaking at an inappropriate volume that deviates from the normal volume of the user's voice. In one embodiment, the analysis module 630 can determine the user 124 is speaking too loudly, or too quietly, according to a profile 738. The determination may be based, at least in part, on ambient noise levels proximate to the user 124 collected by sensors 242. Optionally, the determination that the user 124 is speaking at an inappropriate volume may be based on the volume of the user's voice being different from the ambient noise level by a predetermined percentage. In one embodiment, the percentage may be between about 20% above and about 20% below the ambient noise level. In another embodiment, the percentage may be between about 10% above and about 10% below the ambient noise level. As described above, the inappropriate volume may also be described as a predetermined decibel level above or below the ambient noise level. In one example, the inappropriate volume is define as greater than about 10 decibels below or above the ambient noise level.

If the sensor data does not indicate a deviation from the normal state of the user, method 1200 may return NO to collecting new sensor data, in step 1208. In this way, the sensor data is periodically or continually collected and analyzed by the analysis module 630 to determine whether the sensor data is associated with a deviation from a normal state define by a profile in portion 738 of data structure 704.

If the sensor data does indicate a deviation from the normal state of the user, method 1200 proceeds YES to operation 1224. In operation 1224 the feedback device control system 204 generates an alert. The alert may be defined by a rule saved in portion 738. The alert may include providing an alert to the user as specified by the profile 738 created by the user 124. The alert can be at least one of audible, visible, and haptic. In one embodiment, the alert is provided by the feedback device 108. Additionally, or alternatively, the alert is generated by a device 112, 116, 120, 122 in communication with the feedback device 108. In one embodiment, a first alert is associated with the volume of the user's voice, a second alert is associated with an abnormal emotional state of the user; and a third alert is associated with an abnormal medical state of the user.

In one example, when the user's voice deviates from a normal state, such as when the user is speaking too loudly based on ambient noise levels collected by sensors 242, the feedback control system 204 may determine that a first profile in portion 738 includes a first rule to provide a first alert to the user in operation 1224. The alert may be generated in operation 1224 by one or more of the audio I/O interface 654 and the video i/o interface 664. The alert may include one or more of a first visual signal, a first haptic signal, and a first audible signal. Similarly, if the user 124 is speaking too quietly as determined based on a second profile in portion 738, a second alert may be provided to the user in operation 1224. In one embodiment, the user 124 has at least some hearing loss. Accordingly, the alert may comprise a first vibration when the user's voice is too loud and a second vibration when the user's voice is too quiet. In another embodiment, the first vibration has a first pattern, a first intensity, and a first duration that is different than a second pattern, a second intensity, and a second duration of the second vibration.

In another example, if the sensor data indicates the user 124 is experiencing an abnormal emotional state compared to the normal emotional state defined by a third profile in portion 738, the feedback control system 204 may provide a third alert specified by the third profile in operation 1224.

Similarly, if the sensor data indicates a health condition associated with an abnormal medical state compared to a normal medical state defined by a health profile 738, the feedback control system 204 may provide an alert associated with the health state. In this manner, the feedback device control system 204 may react in differently, and provide different alerts, in operation 1224 based on a plurality of profiles stored in portion 738 of data structure 704 for each user 124.

Additionally, or alternatively, the alert provided in operation 1224 may include providing a notification to another device. For example, if the feedback device control system 204 determines the user 124 is experiencing an emotional state associated with anger, the alert of operation 1224 may include notifying another person, such as a parent or friend of the user 124, by contacting that person's device using network 224. Alternatively, if the user 124 suffers from seizures or unexpected loss of consciousness or sleep (such as due to narcolepsy), the alert may include a notification to another predetermined person.

The exemplary systems and methods of this disclosure have been described in relation to a wearable device and associated devices. However, to avoid unnecessarily obscuring the present disclosure, the preceding description omits a number of known structures and devices. This omission is not to be construed as a limitation of the scopes of the claims. Specific details are set forth to provide an understanding of the present disclosure. It should however be appreciated that the present disclosure may be practiced in a variety of ways beyond the specific detail set forth herein.

Furthermore, while the exemplary aspects, embodiments, options, and/or configurations illustrated herein show the various components of the system collocated, certain components of the system can be located remotely, at distant portions of a distributed network, such as a LAN and/or the Internet, or within a dedicated system. Thus, it should be appreciated, that the components of the system can be combined in to one or more devices, such as a Personal Computer (PC), laptop, netbook, smart phone, Personal Digital Assistant (PDA), tablet, etc., or collocated on a particular node of a distributed network, such as an analog and/or digital telecommunications network, a packet-switch network, or a circuit-switched network. It will be appreciated from the preceding description, and for reasons of computational efficiency, that the components of the system can be arranged at any location within a distributed network of components without affecting the operation of the system. For example, the various components can be located in a switch such as a PBX and media server, gateway, in one or more communications devices, at one or more users' premises, or some combination thereof. Similarly, one or more functional portions of the system could be distributed between a telecommunications device(s) and an associated computing device.

Furthermore, it should be appreciated that the various links connecting the elements can be wired or wireless links, or any combination thereof, or any other known or later developed element(s) that is capable of supplying and/or communicating data to and from the connected elements. These wired or wireless links can also be secure links and may be capable of communicating encrypted information. Transmission media used as links, for example, can be any suitable carrier for electrical signals, including coaxial cables, copper wire and fiber optics, and may take the form of acoustic or light waves, such as those generated during radio-wave and infra-red data communications.

Also, while the flowcharts have been discussed and illustrated in relation to a particular sequence of events, it should be appreciated that changes, additions, and omissions to this sequence can occur without materially affecting the operation of the disclosed embodiments, configuration, and aspects.

A number of variations and modifications of the disclosure can be used. It would be possible to provide for some features of the disclosure without providing others.

It should be appreciated that the various processing modules (e.g., processors, modules, etc.), for example, can perform, monitor, and/or control critical and non-critical tasks, functions, and operations, such as interaction with and/or monitoring and/or control of sensors and device operation.

Optionally, the systems and methods of this disclosure can be implemented in conjunction with a special purpose computer, a programmed microprocessor or microcontroller and peripheral integrated circuit element(s), an ASIC or other integrated circuit, a digital signal processor, a hard-wired electronic or logic circuit such as discrete element circuit, a programmable logic device or gate array such as PLD, PLA, FPGA, PAL, special purpose computer, any comparable means, or the like. In general, any device(s) or means capable of implementing the methodology illustrated herein can be used to implement the various aspects of this disclosure. Exemplary hardware that can be used for the disclosed embodiments, configurations and aspects includes computers, handheld devices, telephones (e.g., cellular, Internet enabled, digital, analog, hybrids, and others), and other hardware known in the art. Some of these devices include processors (e.g., a single or multiple microprocessors), memory, nonvolatile storage, input devices, and output devices. Furthermore, alternative software implementations including, but not limited to, distributed processing or component/object distributed processing, parallel processing, or virtual machine processing can also be constructed to implement the methods described herein.

In yet another embodiment, the disclosed methods may be readily implemented in conjunction with software using object or object-oriented software development environments that provide portable source code that can be used on a variety of computer or workstation platforms. Alternatively, the disclosed system may be implemented partially or fully in hardware using standard logic circuits or VLSI design. Whether software or hardware is used to implement the systems in accordance with this disclosure is dependent on the speed and/or efficiency requirements of the system, the particular function, and the particular software or hardware systems or microprocessor or microcomputer systems being utilized.

In yet another embodiment, the disclosed methods may be partially implemented in software that can be stored on a storage medium, executed on programmed general-purpose computer with the cooperation of a controller and memory, a special purpose computer, a microprocessor, or the like. In these instances, the systems and methods of this disclosure can be implemented as program embedded on personal computer such as an applet, JAVA® or CGI script, as a resource residing on a server or computer workstation, as a routine embedded in a dedicated measurement system, system component, or the like. The system can also be implemented by physically incorporating the system and/or method into a software and/or hardware system.

Although the present disclosure describes components and functions implemented in the aspects, embodiments, and/or configurations with reference to particular standards and protocols, the aspects, embodiments, and/or configurations are not limited to such standards and protocols. Other similar standards and protocols not mentioned herein are in existence and are considered to be included in the present disclosure. Moreover, the standards and protocols mentioned herein and other similar standards and protocols not mentioned herein are periodically superseded by faster or more effective equivalents having essentially the same functions. Such replacement standards and protocols having the same functions are considered equivalents included in the present disclosure.

The present disclosure, in various aspects, embodiments, and/or configurations, includes components, methods, processes, systems and/or apparatus substantially as depicted and described herein, including various aspects, embodiments, configurations embodiments, subcombinations, and/or subsets thereof. Those of skill in the art will understand how to make and use the disclosed aspects, embodiments, and/or configurations after understanding the present disclosure. The present disclosure, in various aspects, embodiments, and/or configurations, includes providing devices and processes in the absence of items not depicted and/or described herein or in various aspects, embodiments, and/or configurations hereof, including in the absence of such items as may have been used in previous devices or processes, e.g., for improving performance, achieving ease and\or reducing cost of implementation.

The foregoing discussion has been presented for purposes of illustration and description. The foregoing is not intended to limit the disclosure to the form or forms disclosed herein. In the foregoing Detailed Description for example, various features of the disclosure are grouped together in one or more aspects, embodiments, and/or configurations for the purpose of streamlining the disclosure. The features of the aspects, embodiments, and/or configurations of the disclosure may be combined in alternate aspects, embodiments, and/or configurations other than those discussed above. This method of disclosure is not to be interpreted as reflecting an intention that the claims require more features than are expressly recited in each claim. Rather, as the following claims reflect, inventive aspects lie in less than all features of a single foregoing disclosed aspect, embodiment, and/or configuration. Thus, the following claims are hereby incorporated into this Detailed Description, with each claim standing on its own as a separate preferred embodiment of the disclosure.

Moreover, though the description has included description of one or more aspects, embodiments, and/or configurations and certain variations and modifications, other variations, combinations, and modifications are within the scope of the disclosure, e.g., as may be within the skill and knowledge of those in the art, after understanding the present disclosure. It is intended to obtain rights which include alternative aspects, embodiments, and/or configurations to the extent permitted, including alternate, interchangeable and/or equivalent structures, functions, ranges or steps to those claimed, whether or not such alternate, interchangeable and/or equivalent structures, functions, ranges or steps are disclosed herein, and without intending to publicly dedicate any patentable subject matter.

Examples of the processors as described herein may include, but are not limited to, at least one of Qualcomm® Snapdragon® 800 and 801, Qualcomm® Snapdragon® 610 and 615 with 4G LTE Integration and 64-bit computing, Apple® A7 processor with 64-bit architecture, Apple® M7 motion coprocessors, Samsung® Exynos® series, the Intel® Core™ family of processors, the Intel® Xeon® family of processors, the Intel® Atom™ family of processors, the Intel Itanium® family of processors, Intel® Core® i5-4670K and i7-4770K 22nm Haswell, Intel® Core® i5-3570K 22nm Ivy Bridge, the AMD® FX™ family of processors, AMD® FX-4300, FX-6300, and FX-8350 32nm Vishera, AMD® Kaveri processors, Texas Instruments® Jacinto C6000™ automotive infotainment processors, Texas Instruments® OMAP™ automotive-grade mobile processors, ARM® Cortex™-M processors, ARM® Cortex-A and ARM926EJ-S™ processors, other industry-equivalent processors, and may perform computational functions using any known or future-developed standard, instruction set, libraries, and/or architecture.

By way of providing additional background, context, and to further satisfy the written description requirements of 35 U.S.C. § 112, the following are incorporated by reference in their entireties for the express purpose of explaining and further describing the various aspects and embodiments of the present disclosure and for all that they teach: U.S. Pat. App. Pub. No. 2011/0092779, U.S. Pat. App. Pub. No. 2013/0085749, U.S. Pat. App. Pub. No. 2013/0143185, U.S. Pat. App. Pub. No. 2014/0081630, U.S. Pat. App. Pub. No. 2014/0207811, U.S. Pat. App. Pub. No. 2015/0169832, U.S. Pat. App. Pub. No. 2015/0213799, U.S. Pat. App. Pub. No. 2016/0324419, U.S. Patent No. 7,547,279, U.S. Patent No. 7,874,983, U.S. Patent No. 8,719,016, U.S. Patent No. 9,020,822, U.S. Patent No. 9,098,467, U.S. Patent No. 9,147,296, U.S. Patent No. 9,262,612, U.S. Patent No. 9,357,921, U.S. Patent No. 9,418,390.

The following clauses form part of the present disclosure:
(1) A method of providing an alert to a user in response to a deviation from a normal state of the user, comprising: receiving a profile from the user defining the normal state of the user; collecting data related to the user by a sensor of a feedback device; comparing the collected data to the normal state defined by the profile; automatically determining if the collected data indicates a deviation from the normal state; and generating the alert when the collected data indicates a deviation from the normal state, wherein the alert provides information on an abnormal state to allow the user to alter the abnormal state.
(2) The method of clause (1), wherein the sensor is a microphone and the collected data relates to a voice of the user.
(3) The method of any preceding clause, in particular clause (2), wherein comparing the collected data includes evaluating at least one of a pitch, a pace, a frequency, a volume, a cadence, and micro tremors included in the collected data.
(4) The method of any preceding clause, in particular clause (2), wherein the feedback device comprises: a first housing with the sensor; a second housing including a processor; and a third housing with a second sensor to collect data associated with the user's voice transmitted through a body of the user, the third housing configured to be positioned proximate to the user's body.
(5) The method of any preceding clause, in particular clause (1), wherein automatically determining if the collected data indicates a deviation further comprises: collecting data related to the user by a second sensor of a second device in communication with the feedback device; receiving, by the feedback device, the collected data from second sensor; and comparing the collected data from each of the sensor and the second sensor to the normal state defined by the profile.
(6) The method of any preceding clause, in particular clause (1), wherein the profile defines one or more of: a normal volume of a voice of the user; a normal emotional state of the user; and a normal medical state of the user.
(7) The method of any preceding clause, in particular clause (6), wherein the collected data indicates a deviation from the normal state when at least one of: the user's voice is too loud or too quiet compared to the normal volume; the user's emotional state is one of anger and fear; and the medical state of the user deviates from the normal medical state.
(8) The method of any preceding clause, in particular clause (6), wherein receiving the profile from the user comprises the user: defining a minimum and a maximum volume for the user's voice; defining the normal emotional state for the user; and defining the normal medical state of the user.
(9) The method of any preceding clause, in particular clause (8), wherein the minimum and maximum volume of the user's voice are defined in relation to an ambient noise level.
(10) The method of any preceding clause, in particular clause (9), wherein: the minimum volume for the user's voice is up to about 10 decibels below the ambient noise level collected by the sensor; and the maximum volume for the user's voice is up to about 10 decibels above the ambient noise level collected by the sensor.
(11) The method of any preceding clause, in particular clause (8), wherein: the normal emotional state for the user is calm; and the normal medical state of the user is conscious.
(12) The method of any preceding clause, in particular clause (8), wherein the alert includes at least one of a vibration and a sound.
(13) The method of any preceding clause, in particular clause (12), wherein the alert further comprises: a first alert associated with the volume of the user's voice; a second alert associated with an abnormal emotional state of the user; and a third alert associated with an abnormal medical state of the user.
(14) The method of any preceding clause, in particular clause (13), wherein the user has at least some hearing loss and the first alert comprises: a first vibration when the user's voice is too loud; and a second vibration when the user's voice is too quiet.
(15) The method of any preceding clause, in particular clause (1), further comprising transmitting the collected data to a second device in communication with the feedback device, wherein the second device: compares the collected data to the normal state defined by the profile; and automatically determines if the collected data indicates a deviation from the normal state.
(16) A feedback device for providing an alert to a user in response to a deviation from a normal state of the user, comprising: a first housing with a first sensor; a second housing including a processor; a third housing with a second sensor, the third housing configured to be positioned proximate to a body of the user; and a computer-readable storage medium storing computer-readable instructions, which when executed by the processor, cause the processor to perform: receiving a profile from the user defining the normal state of the user; receiving data related to the user collected by at least one of the first and second sensors; comparing the collected data to the normal state defined by the profile; automatically determining if the collected data indicates a deviation from the normal state; and generating the alert when the collected data indicates a deviation from the normal state, wherein the alert provides information to the user on an abnormal state of the user.
(17) The feedback device of clause (16), wherein: the collected data relates to a voice of the user; the first sensor is a microphone to collect data associated with the user's voice transmitted through air; and the second sensor is operable to collect data associated with the user's voice transmitted through the user's body.
(18) The feedback device of any preceding clause, in particular clause (17), wherein the feedback device further comprises a communications module to connect the feedback device to a second device over a network.
(19) The feedback device of any preceding clause, in particular clause (18), wherein: the feedback device transmits the collected data to the second device; and the second device: receives the collected data from the feedback device; and compares the collected data to the normal state defined by the profile.
(20) The feedback device of any preceding clause, in particular clause (17), wherein: the profile defines one or more of a normal volume of the user's voice, a normal emotional state of the user, and a normal medical state of the user; the collected data indicates a deviation from the normal state when at least one of the user's voice is too loud or too quiet compared to the normal volume, the user's emotional state is one of anger, and the medical state of the user deviates from the normal medical state; and wherein the alert further comprises a first alert associated with an abnormal volume of the user's voice, a second alert associated with an abnormal emotional state of the user, and a third alert associated with an abnormal medical state of the user.
(21) The feedback device of any preceding clause, in particular clause (20), wherein the normal volume of the user's voice is defined as a minimum volume and a maximum volume of the user's voice in relation to an ambient noise level.
(22) The feedback device of any preceding clause, in particular clause (21), wherein the collected data indicates a deviation from the normal state when the user's voice is more than about 10 decibels below the ambient noise level and when the user's voice is more than about 10 decibels above the ambient noise level, and wherein the normal medical state of the user is conscious.
(23) A non-transitory computer readable medium having stored thereon computer-executable instructions, the computer executable instructions causing a processor to execute a method of providing an alert to a user in response to a deviation from a normal state of the user, the computer-executable instructions comprising: an instruction to receive a profile from the user defining the normal state; an instruction to collect data related to the user by a sensor of a feedback device; an instruction to compare the collected data to the normal state defined by the profile; an instruction to automatically determine if the collected data indicates a deviation from the normal state; and an instruction to generate the alert when the collected data indicates a deviation from the normal state, wherein the alert provides information on an abnormal state indicated by the collected data to the user.
(24) The non-transitory computer readable medium of clause (23), wherein the profile defines one or more of a normal volume of a voice of the user, a normal emotional state of the user, and a normal medical state of the user, and wherein the instruction to receive the profile from the user further comprises: an instruction to receive a minimum volume of the user's voice in relation to an ambient noise level; an instruction to receive a maximum volume of the user's voice in relation to the ambient noise level; an instruction to receive the normal emotional state of the user; and an instruction to receive the normal medical state of the user.
(25) The non-transitory computer readable medium of any preceding clause, in particular clause (24), wherein: the minimum volume for the user's voice is not more than about 10 decibels below the ambient noise level; the maximum volume for the user's voice is not more than about 10 decibels above the ambient noise level collected by the sensor; the normal emotional state for the user is calm; and the normal medical state of the user is conscious.
(26) The non-transitory computer readable medium of any preceding clause, in particular clause (23), further comprising: an instruction to transmit the collected data to a second device in communication with the feedback device, wherein the second device evaluates at least one of a pitch, a pace, a frequency, a volume, a cadence, and micro tremors included in the collected data; and an instruction to receive processed data from the second device.

## Claims

1. A method of providing an alert to a user in response to a deviation from a normal state of the user, comprising:
receiving a profile from the user defining the normal state of the user;
collecting data related to the user by a sensor of a feedback device;
comparing the collected data to the normal state defined by the profile;
automatically determining if the collected data indicates a deviation from the normal state; and
generating the alert when the collected data indicates a deviation from the normal state, wherein the alert provides information on an abnormal state to allow the user to alter the abnormal state.

2. The method of claim 1, wherein the feedback device comprises:
a first housing with the sensor;
a second housing including a processor; and
a third housing with a second sensor to collect data associated with a voice of the user transmitted through a body of the user, the third housing configured to be positioned proximate to the user's body.

3. The method of any preceding claim, wherein one or more of:
the sensor is a microphone and the collected data relates to a voice of the user;
comparing the collected data includes evaluating at least one of a pitch, a pace, a frequency, a volume, a cadence, and micro tremors included in the collected data; and
the profile defines one or more of:
a normal volume of a voice of the user;
a normal emotional state of the user; and
a normal medical state of the user.

4. The method of any preceding claim, wherein automatically determining if the collected data indicates a deviation further comprises:
collecting data related to the user by a second sensor of a second device in communication with the feedback device;
receiving, by the feedback device, the collected data from second sensor; and
comparing the collected data from each of the sensor and the second sensor to the normal state defined by the profile.

5. The method of claim 3, wherein:
the collected data indicates a deviation from the normal state when at least one of:
the user's voice is too loud or too quiet compared to the normal volume;
the user's emotional state is one of anger and fear; and
the medical state of the user deviates from the normal medical state; and
receiving the profile from the user comprises the user defining one or more of:
a minimum and a maximum volume for the user's voice such that the minimum and maximum volume of the user's voice are defined in relation to an ambient noise level;
the normal emotional state for the user; and
the normal medical state of the user.

6. The method of claim 5, wherein one or more of:
the minimum volume for the user's voice is up to about 10 decibels below the ambient noise level collected by the sensor;
the maximum volume for the user's voice is up to about 10 decibels above the ambient noise level collected by the sensor;
the normal emotional state for the user is calm;
the normal medical state of the user is conscious; and
the alert includes at least one of a vibration and a sound.

7. The method of any preceding claim, wherein:
the alert further comprises:
a first alert associated with the volume of the user's voice;
a second alert associated with an abnormal emotional state of the user; and
a third alert associated with an abnormal medical state of the user; and
when the user has at least some hearing loss, the first alert further comprises:
a first vibration when the user's voice is too loud; and
a second vibration when the user's voice is too quiet.

8. The method of any preceding claim, further comprising transmitting the collected data a second device in communication with the feedback device, the second device operable to (i) compare the collected data to the normal state defined by the profile; (ii) transmit a signal to the feedback device if the collected data indicates a deviation from the normal state.

9. A feedback device for providing an alert to a user in response to a deviation from a normal state of the user, comprising:
a first housing with a first sensor;
a second housing including a processor;
a third housing with a second sensor, the third housing configured to be positioned proximate to a body of the user; and
a computer-readable storage medium storing computer-readable instructions, which when executed by the processor, cause the processor to perform:
receiving a profile from the user defining the normal state of the user;
receiving data related to the user collected by at least one of the first and second sensors;
comparing the collected data to the normal state defined by the profile;
automatically determining if the collected data indicates a deviation from the normal state; and
generating the alert when the collected data indicates a deviation from the normal state, wherein the alert provides information to the user on an abnormal state of the user.

10. The feedback device of claim 9, wherein one or more of:
the collected data relates to a voice of the user;
the first sensor is a microphone to collect data associated with the user's voice transmitted through air;
the second sensor is operable to collect data associated with the user's voice transmitted through the user's body; and
the feedback device further comprises a communications module to connect the feedback device to a second device over a network, the second device operable to evaluate at least one of a pitch, a pace, a frequency, a volume, a cadence, and micro tremors included in the collected data and the second device further operable to transmit a signal to the feedback device when the collected data indicates a deviation from the normal state.

11. The feedback device of claim 9 or 10, wherein one or more of:
the profile defines one or more of (i) a normal volume of the user's voice defined as a minimum volume and a maximum volume of the user's voice in relation to an ambient noise level, (ii) a normal emotional state of the user, and (iii) a normal medical state of the user;
the collected data indicates a deviation from the normal state when at least one of (i) the user's voice is too loud or too quiet compared to the normal volume, (ii) the user's emotional state is one of anger, and (iii) the medical state of the user deviates from the normal medical state; and
the alert further comprises one or more of (i) a first alert associated with an abnormal volume of the user's voice, (ii) a second alert associated with an abnormal emotional state of the user, and (iii) a third alert associated with an abnormal medical state of the user.

12. The feedback device of claim 11, wherein the collected data indicates a deviation from the normal state when the user's voice is more than about 10 decibels below the ambient noise level and when the user's voice is more than about 10 decibels above the ambient noise level, and wherein the normal medical state of the user is conscious.

13. A non-transitory computer readable medium having stored thereon computer-executable instructions, the computer executable instructions causing a processor to execute a method of providing an alert to a user in response to a deviation from a normal state of the user, the computer-executable instructions comprising:
an instruction to receive a profile from the user defining the normal state;
an instruction to collect data related to the user by a sensor of a feedback device;
an instruction to compare the collected data to the normal state defined by the profile;
an instruction to automatically determine if the collected data indicates a deviation from the normal state; and
an instruction to generate the alert when the collected data indicates a deviation from the normal state, wherein the alert provides information on an abnormal state indicated by the collected data to the user.

14. The non-transitory computer readable medium of claim 13, wherein:
the profile defines one or more of (i) a normal volume of a voice of the user, (ii) a normal emotional state of the user, and (iii) a normal medical state of the user;
the instruction to receive the profile from the user further comprises one or more of:
an instruction to receive a minimum volume of the user's voice in relation to an ambient noise level;
an instruction to receive a maximum volume of the user's voice in relation to the ambient noise level;
an instruction to receive the normal emotional state of the user; and
an instruction to receive the normal medical state of the user.

15. The non-transitory computer readable medium of claim 13 or 14, wherein one or more of:
the minimum volume for the user's voice is not more than about 10 decibels below the ambient noise level;
the maximum volume for the user's voice is not more than about 10 decibels above the ambient noise level collected by the sensor;
the normal emotional state for the user is calm;
the normal medical state of the user is conscious; and
further comprising:
an instruction to transmit the collected data to a second device in communication with the feedback device, the second device operable to evaluate at least one of a pitch, a pace, a frequency, a volume, a cadence, and micro tremors included in the collected data; and
an instruction to receive processed data from the second device.
